# EUROPÄISCHE PATENTSCHRIFT

(11) **EP 2 462 994 B1**
(45) Veröffentlichungstag und Bekanntmachung des Hinweises auf die Patenterteilung: **04.09.2013**
(21) Anmeldenummer: 10194584.8
(22) Anmeldetag: 10.12.2010
(51) Int. Cl.: A62C 99/00

(54) **Inertisierungsverfahren zur Brandverhütung und/oder Feuerlöschung sowie Inertisierungsanlage zur Durchführung des Verfahrens**
Inertisation method to prevent and/or extinguish fires and inertisation system to implement the method
Procédé d'inertisation de prévention contre les incendies et/ou d'extinction d'incendies, ainsi qu'installation d'inertisation destinée à l'exécution du procédé

(43) Veröffentlichungstag der Anmeldung: 13.06.2012
(73) Patentinhaber: Amrona AG, 6302 Zug (CH)
(72) Erfinder: Eberlein, Anselm, 30419, Hannover (DE); Kersten, Peter Uwe, 29323 Wietze (DE)
(74) Vertreter: Rupprecht, Kay

(56) Entgegenhaltungen:
- EP-A1- 2 204 219
- EP-A1- 2 233 175
- DE-B3- 10 235 718

## Beschreibung

Die vorliegende Erfindung betrifft ein Inertisierungsverfahren gemäß dem Oberbegriff des Patentanspruches 1.

Demgemäß betrifft die Erfindung insbesondere ein Inertisierungsverfahren zur Brandverhütung und/oder Feuerlöschung, bei welchem in der Raumatmosphäre eines umschlossenen Raumes ein vorgebbarer und im Vergleich zur normalen Umgebungsluft reduzierter Sauerstoffgehalt eingestellt und gehalten wird. Hierzu wird in einer Mischkammer ein Anfangs-Gasgemisch bereitgestellt, welches Sauerstoff, Stickstoff und ggf. weitere Komponenten aufweist, wobei aus diesem bereitgestellten Anfangs-Gasgemisch in einem Gasseparationssystem zumindest ein Teil des Sauerstoffs abgetrennt und auf diese Weise am Ausgang des Gasseparationssystems ein mit Stickstoff angereichertes Gasgemisch bereitgestellt wird, und wobei dieses mit Stickstoff angereicherte Gasgemisch in die Raumatmosphäre des umschlossenen Raumes geleitet wird. Der Sauerstoffrestgehalt des mit Stickstoff angereicherten Gasgemisches wird vorzugsweise automatisch in Abhängigkeit von dem aktuell in der Raumatmosphäre des umschlossenen Raumes herrschenden Sauerstoffgehalt verändert, wobei zum Bereitstellen des Anfangs-Gasgemisches ein Teil der in dem umschlossenen Raum enthaltenen Raumluft in geregelter Weise dem Raum entnommen und der Mischkammer zugeführt wird, und wobei dem entnommenen Teil der Raumluft in geregelter Weise Frischluft zugemischt wird

Die Erfindung betrifft ferner eine Inertisierungsanlage nach dem Oberbegriff des Patentanspruches 7.

Demnach betrifft die Erfindung ferner insbesondere eine Inertisierungsanlage zum Einstellen und/oder Halten eines vorgebbaren und im Vergleich zur normalen Umgebungsluft reduzierten Sauerstoffgehalts in der Raumatmosphäre eines umschlossenen Raumes, wobei die Inertisierungsanlage ein Gasseparationssystem aufweist, mit welchem von einem Stickstoff und Sauerstoff enthaltenen Anfangs-Gasgemisch zumindest ein Teil des Sauerstoffs abgetrennt und auf diese Weise am Ausgang des Gasseparationssystems ein mit Stickstoff angereichertes Gasgemisch bereitgestellt wird, und wobei die Inertisierungsanlage ein Zuführleitungssystem aufweist zum Zuführen des mit Stickstoff angereicherten Gasgemisches zu dem umschlossenen Raum. Es ist ferner eine Steuereinrichtung vorgesehen ist, welche ausgelegt ist, das Gasseparationssystem derart anzusteuern, dass der Sauerstoffrestgehalt des mit Stickstoff angereicherten Gasgemisches in Abhängigkeit von dem aktuell in der Raumatmosphäre des umschlossenen Raumes herrschenden Sauerstoffgehalt verändert wird. Zusätzlich ist eine Mischkammer vorgesehen zum Bereitstellen des Anfangs-Gasgemisches, wobei in der Mischkammer ein erstes Leitungssystem mündet, über welches in einer von der Steuereinrichtung geregelten Weise ein Teil der in dem umschlossenen Raum enthaltenen Raumluft dem Raum entnommen und der Mischkammer zugeführt wird, und wobei in der Mischkammer ein zweites Leitungssystem mündet, über welches in einer von der Steuereinrichtung geregelten Weise Frischluft der Mischkammer zugeführt wird.

Bei einer Inertisierungsanlage der zuvor genannten Art handelt es sich insbesondere um eine Anlage zur Minderung des Risikos und zum Löschen von Bränden in einem zu überwachenden Schutzraum, wobei zur Brandverhütung bzw. Brandbekämpfung der Schutzraum dauerinertisiert wird. Die Wirkungsweise einer solchen Inertisierungsanlage beruht auf der Kenntnis, dass in umschlossenen Räumen der Brandgefahr dadurch begegnet werden kann, dass in dem betroffenen Bereich die Sauerstoffkonzentration im Normalfall auf einem Wert von beispielsweise etwa 12 bis 15 Vol.-% dauerhaft abgesenkt wird. Bei dieser Sauerstoffkonzentration können die meisten brennbaren Materialien nicht mehr brennen. Haupteinsatzgebiet sind insbesondere EDV-Bereiche, elektrische Schalt- und Verteilerräume, umschlossene Einrichtungen sowie Lagerbereiche mit hochwertigen Wirtschaftsgütern.

Die bei dem Inertisierungsverfahren resultierende Präventions- bzw. Löschwirkung beruht dabei auf dem Prinzip der Sauerstoffverdrängung. Normale Umgebungsluft besteht bekanntlich zu etwa 21 Vol.-% aus Sauerstoff, zu etwa 78 Vol.-% aus Stickstoff und zu etwa 1 Vol.-% aus sonstigen Gasen. Um in einem Schutzraum das Risiko der Entstehung eines Brandes wirksam verringen zu können, wird die Sauerstoffkonzentration in dem betreffenden Raum durch Einleiten von Inertgas, wie beispielsweise Stickstoff, verringert. Im Hinblick auf die Brandlöschung von den meisten Feststoffen ist es bekannt, dass eine Löschwirkung bereits dann einsetzt, wenn der Sauerstoffanteil unter 15 Vol.-% absinkt. Abhängig von den in dem Schutzraum vorhandenen brennbaren Materialien kann ein weiteres Absenken des Sauerstoffanteils auf beispielsweise 12 Vol.-% erforderlich sein. Demnach kann durch eine Dauerinertisierung des Schutzraumes auch das Risiko der Entstehung eines Brandes in dem Schutzraum in effektiver Weise vermindert werden.

Bei dem erfindungsgemäßen Verfahren bzw. Inertisierungsanlage wird die Erkenntnis ausgenutzt, dass die Stickstoff-Reinheit des am Ausgang des Gasseparationssystems bereitgestellten und mit Stickstoff angereicherten Gasgemisches bzw. der Sauerstoffrestgehalt des am Ausgang des Gasseparationssystems bereitgestellten und mit Stickstoff angereicherten Gasgemisches einen Einfluss auf die sogenannte "Absenkzeit" hat. Unter dem Begriff "Absenkzeit" ist die Zeitdauer zu verstehen, welche erforderlich ist, um in der Raumatmosphäre des umschlossenen Raumes ein vorgegebenes Inertisierungsniveau einzustellen.

Im Einzelnen wird vorliegend die Erkenntnis ausgenutzt, dass mit zunehmender Stickstoff-Reinheit der Luftfaktor des Gasseparationssystems exponentiell ansteigt.

Unter dem Begriff "Luftfaktor" ist das Verhältnis der pro Zeiteinheit dem Gasseparationssystem bereitgestellten Menge an Anfangs-Gasgemisch zur pro Zeiteinheit am Ausgang des Gasseparationssystems bereitgestellten Menge an mit Stickstoff angereichertem Gas zu verstehen. Bei einem Stickstofferzeuger ist üblicherweise die Stickstoff-Reinheit am Ausgang des Gasseparationssystems frei wählbar und kann am Stickstoffgenerator eingestellt werden. Dabei gilt grundsätzlich, dass die Betriebskosten des Stickstoffgenerators umso günstiger sind, je niedriger die eingestellte Stickstoff-Reinheit ausfällt. Dann nämlich kann mit vergleichsweise kurzer Laufzeit des Kompressors am Ausgang des Gasseparationssystems ein mit Stickstoff angereichertes Gasgemisch mit der eingestellten Stickstoff-Reinheit bereitgestellt werden.

Im Hinblick auf die bei der Inertisierung des Raumes anfallenden Betriebskosten der Inertisierungsanlage müssen jedoch weitere Faktoren berücksichtigt werden. Hierzu gehören insbesondere Spülfaktoren, um mit Hilfe des am Ausgang des Gasseparationssystems bereitgestellten und mit Stickstoff angereicherten Gasgemisches den Sauerstoff in der Raumatmosphäre des umschlossenen Raumes soweit zu verdrängen, dass das vorgegebene Inertisierungsniveau erreicht wird bzw. aufrechterhalten bleiben kann. Zu diesen Spülfaktoren gehören insbesondere die pro Zeiteinheit von dem Gasseparationssystem bereitstellbare Menge an mit Stickstoff angereichertem Gas, das Raumvolumen des umschlossenen Raumes und die Differenz zwischen dem aktuell in der Raumatmosphäre des umschlossenen Raumes herrschenden Sauerstoffgehalt und dem Sauerstoffgehalt, der dem vorgegebenen Inertisierungsniveau entspricht. Hierbei ist zu berücksichtigen, dass im Hinblick auf die Absenkzeit die Stickstoff-Reinheit des am Ausgang des Gasseparationssystems bereitgestellten Gasgemisches bzw. der Sauerstoffrestgehalt des mit Stickstoff angereicherten Gasgemisches ebenfalls eine entscheidende Rolle spielt, da der Spülvorgang schneller von statten geht, je geringer der Sauerstoffrestgehalt in dem mit Stickstoff angereicherten Gasgemisch ist.

Unter dem hier verwendeten Begriff "Gasseparationssystem" ist ein System zu verstehen, mit dem aus einem Anfangs-Gasgemisch, welches zumindest die Komponenten "Sauerstoff" und "Stickstoff" aufweist, eine Aufteilung in mit Sauerstoff angereichertes Gas sowie in mit Stickstoff angereichertes Gas erfolgen kann. Üblicherweise basiert die Funktionsweise eines derartigen Gasseparationssystems auf der Wirkung von Gasseparationsmembranen. Das bei der vorliegenden Erfindung zum Einsatz kommende Gasseparationssystem ist in der ersten Linie zur Abscheidung von Sauerstoff aus dem Anfangs-Gasgemisch konzipiert. Ein derartiges Gasseparationssystem wird häufig auch als "Stickstoffgenerator" bezeichnet.

Bei einem derartigen Gasseparationssystem kommt beispielsweise ein Membranmodul oder dergleichen zum Einsatz, in welchem die verschiedenen in dem Anfangs-Gasgemisch enthaltenen Komponenten (wie beispielsweise Sauerstoff, Stickstoff, Edelgase etc.) entsprechend ihrer molekularen Struktur unterschiedlich schnell durch die Membrane diffundieren. Als Membrane kann eine Hohlfasermembrane zum Einsatz kommen. Sauerstoff, Kohlendioxid und Wasserstoff haben einen hohen Diffusionsgrad und verlassen aufgrund dessen bei der Durchströmung des Membranmoduls das Anfangs-Gasgemisch relativ schnell. Stickstoff mit einem niedrigen Diffusionsgrad durchdringt die Hohlfasermembrane des Membranmoduls sehr langsam und reichert sich auf diese Weise beim Durchströmen der Hohlfaser bzw. des Membranmoduls an. Die Stickstoff-Reinheit bzw. der Sauerstoffrestgehalt in dem aus dem Gasseparationssystem austretenden Gasgemisch wird von der Durchströmgeschwindigkeit bestimmt. Durch die Variation von Druck und Volumenstrom lässt sich das Gasseparationssystem auf die geforderte Stickstoff-Reinheit und nötige Stickstoffmenge einstellen. Im Einzelnen wird die Reinheit des Stickstoffes wird durch die Geschwindigkeit, mit der das Gas durch die Membrane strömt (Verweilzeit), geregelt.

Das abgeschiedene, mit Sauerstoff angereicherte Gasgemisch wird üblicherweise gesammelt und unter atmosphärischem Druck in die Umgebung abgeblasen. Das komprimierte, mit Stickstoff angereicherte Gasgemisch wird am Ausgang des Gasseparationssystems bereitgestellt. Bei der Analyse der Produktgas-Zusammensetzung erfolgt die Messung über den Sauerstoffrestgehalt in Vol.-%. Der Stickstoffgehalt wird berechnet, indem der gemessene Sauerstoffrestgehalt von 100 % abgezogen wird. Dabei ist zu berücksichtigen, dass dieser Wert zwar als Stickstoffgehalt bzw. Stickstoff-Reinheit bezeichnet wird, es sich aber faktisch um den Inertgehalt handelt, da sich dieser Teilstrom nicht nur aus Stickstoff, sondern auch aus anderen Gaskomponenten, wie beispielsweise Edelgasen, zusammensetzt.

Üblicherweise wird das Gasseparationssystem bzw. der Stickstoffgenerator mit Druckluft gespeist, die von vorgeschalteten Filtereinheiten gereinigt wird. Grundsätzlich ist es möglich, zur Bereitstellung des mit Stickstoff angereicherten Gases ein Druckwechselverfahren (PSA-Technologie) anzuwenden, die mit zwei Molekularsiebbetten arbeitet, wobei beide Siebe abwechselnd von einem Filtermodus in einen Regenerationsmodus geschaltet werden, wodurch der Strom von mit Stickstoff angereichertem Gas gewährt wird.

Wenn beispielsweise im Stickstoffgenerator eine Membrantechnik zum Einsatz kommt, wird die allgemeine Erkenntnis ausgenutzt, dass verschiedene Gase unterschiedlich schnell durch Materialien diffundieren. Beim Stickstoffgenerator werden in diesem Fall die unterschiedlichen Diffusionsgeschwindigkeiten der Hauptbestandteile der Luft, nämlich Stickstoff, Sauerstoff und Wasserdampf, technisch zur Erzeugung eines Stickstoffstromes bzw. einer mit Stickstoff angereicherten Luft genutzt. Im Einzelnen wird zur technischen Realisierung eines auf der Membrantechnik basierenden Stickstoffgenerators auf die Außenflächen von Hohlfasermembranen ein Separationsmaterial aufgebracht, durch welches Wasserdampf und Sauerstoff sehr gut diffundieren. Der Stickstoff hingegen besitzt für dieses Separationsmaterial nur eine geringe Diffusionsgeschwindigkeit. Wird die derart präparierte Hohlfaser innen von Luft durchströmt, diffundieren Wasserdampf und Sauerstoff schnell durch die Hohlfaserwandung nach außen, während der Stickstoff weitgehend im Faserinneren gehalten wird, so dass während des Durchganges durch die Hohlfaser eine starke Aufkonzentration des Stickstoffes stattfindet. Die Effektivität dieses Trennungsvorganges ist im Wesentlichen von der Strömungsgeschwindigkeit in der Faser und der Druckdifferenz über die Hohlfaserwandung hinweg abhängig. Mit sinkender Strömungsgeschwindigkeit und/oder höherer Druckdifferenz zwischen Innen- und Außenseite der Hohlfasermembran steigt die Reinheit des resultierenden Stickstoffstromes an. Allgemein ausgedrückt kann somit bei einem auf der Membrantechnik basierenden Stickstoffgenerator der Grad der Stickstoffanreicherung in der vom Stickstoffgenerator bereitgestellten mit Stickstoff angereicherten Luft in Abhängigkeit von der Verweilzeit der von der Druckluftquelle bereitgestellten Druckluft in dem Luftseparationssystem des Stickstoffgenerators gesteuert werden.

Wenn andererseits beispielsweise im Stickstoffgenerator die PSA-Technik zum Einsatz kommt, werden unterschiedliche Bindungsgeschwindigkeiten des Luftsauerstoffes und Luftstickstoffes an speziell behandelter Aktivkohle ausgenutzt. Dabei ist die Struktur der verwendeten Aktivkohle so verändert, dass eine extrem große Oberfläche mit einer großen Anzahl von Mikro- und Submikroporen (d < 1 nm) vorhanden ist. Bei dieser Porengröße diffundieren die Sauerstoffmoleküle der Luft wesentlich schneller in die Poren hinein, als die Stickstoffmoleküle, so dass sich die Luft in der Umgebung der Aktivkohle mit Stickstoff anreichert. Bei einem auf der PSA-Technik basierenden Stickstoffgenerator kann daher ― wie auch bei einem auf der Membrantechnik basierenden Generator ― der Grad der Stickstoffanreicherung in der vom Stickstoffgenerator bereitgestellten mit Stickstoff angereicherten Luft in Abhängigkeit von der Verweilzeit der von der Druckluftquelle bereitgestellten Druckluft in dem Stickstoffgenerators gesteuert werden.

Wie bereits angedeutet, wird bei der erfindungsgemäßen Lösung die Erkenntnis ausgenutzt, einerseits dass mit zunehmender Stickstoff-Reinheit der Luftfaktor des Gasseparationssystems exponentiell ansteigt, und andererseits dass zum Einstellen eines vorgegebenen Inertisierungsniveaus die zum Einsatz kommenden Kompressoren der Inertisierungsanlage um so länger laufen müssen, je geringer die Differenz zwischen dem in der Raumatmosphäre des umschlossenen Raumes aktuell herrschenden Sauerstoffgehalt und dem Sauerstoffrestgehalt in dem mit Stickstoff angereichertem Gasgemisch ist. Hierbei ist zu berücksichtigen, dass der Zeitdauer des Absenkvorganges eines zu inertisierenden Raumes, sei es für die Halteregelung des Raumes bei einem festen Restsauerstoffgehalt oder während des Absenkens auf ein neues Absenkungsniveau, der Energieverbrauch der Inertisierungsanlage nahezu direkt proportional ist, da der dem Gasseparationssystem vorgeschaltete Kompressor auf seinem Arbeitspunkt mit optimalen Wirkungsgrad digital gefahren wird.

Demnach bleibt festzuhalten, dass ― wenn für die Stickstoff-Reinheit ein niedriger Wert von beispielsweise nur 90 Vol.-% gewählt wird ― die Inertgasanlage zum Einstellen eines Inertisierungsniveaus relativ lange betrieben werden muss. Wird der Wert der Stickstoff-Reinheit beispielsweise auf 95 Vol.-% erhöht, erhöht sich ebenfalls die Differenz zwischen dem Sauerstoffgehalt des einzustellenden Inertisierungsniveaus und dem Sauerstoffrestgehalt des am Ausgang des Gasseparationssystems bereitgestellten Gasgemisches, was für sich genommen die zum Einstellen eines Inertisierungsniveaus notwendige Laufzeit des Kompressors und somit den Energieverbrauch der Inertisierungsanlage herabsetzt. Allerdings kommt hier noch der Umstand zum Tragen, dass sich bei Erhöhung der Stickstoff-Reinheit am Ausgang des Gasseparationssystems zwangsläufig auch der Luftfaktor erhöht. Im Hinblick auf die zum Einstellen eines Inertisierungsniveaus erforderliche Laufzeit des Kompressors bzw. den Energieverbrauch der Inertisierungsanlage wirkt sich dieser Umstand negativ aus. Dieser negative Einfluss überwiegt, wenn die durch Erhöhung der Stickstoff-Reinheit bedingte Zunahme des Luftfaktors merklich wird.

Entgegen den üblichen aus dem Stand der Technik bekannten Systemen, bei denen für die Stickstoff-Reinheit des Gasseparationssystems ein fester Wert gewählt wird, geht die vorliegende Erfindung von einer Inertisierungsanlage aus, bei welcher bei der Inertisierung des umschlossenen Raumes der Sauerstoffrestgehalt in dem am Ausgang des Gasseparationssystems bereitgestellten und mit Stickstoff angereicherten Gasgemisch an den aktuell in der Raumatmosphäre des umschlossenen Raumes herrschenden Sauerstoffgehalt vorzugsweise automatisch oder wahlweise automatisch angepasst wird, um auf diese Weise die Stickstoff-Reinheit des Gasseparationssystems auf einen zeitoptimierten Wert einzustellen.

Unter dem hier verwendeten Begriff "zeitoptimierter Wert der Stickstoff-Reinheit" ist die Stickstoff-Reinheit des Gasseparationssystems bzw. der Restsauerstoffgehalt in dem am Ausgang des Gasseparationssystems bereitgestellten und mit Stickstoff angereicherten Gasgemisches zu verstehen, mit welchem bei einer definierten Inertisierungsanlage, bei welcher die pro Zeiteinheit bereitstellbare Menge an mit Stickstoff angereichertem Gasgemisch konstant ist, die Zeitdauer für den Absenkvorgang von einem aktuellen Sauerstoffgehalt auf einen vorgegebenen und einem Inertisierungsniveau entsprechenden Sauerstoffgehalt ein Minimum annimmt.

Aus der Druckschrift EP 2 204 219 A1 sind ein Verfahren sowie eine Vorrichtung der eingangs genannten Art bekannt. Hierbei kommt eine Rückführung zum Einsatz, um einen Teil der in einem umschlossenen Raum enthaltenen Raumluft dem zu schützenden Raum zu entnehmen und einer Mischkammer zuzuführen. In dieser Mischkammer wird dem entnommenen Teil der Raumluft Frischluft zugemischt. Das auf diese Weise bereitgestellte Gasgemisch (Anfangs-Gasgemisch) wird einem Kompressor zugeführt, dort komprimiert und anschließend zu einem Stickstoffgenerator geleitet. In diesem Stickstoffgenerator wird zumindest ein Teil des Sauerstoffs aus dem bereitgestellten Anfangs-Gasgemisch abgetrennt und auf diese Weise am Ausgang des Stickstoffgenerators ein mit Stickstoff angereichertes Gasgemisch bereitgestellt. Dieses mit Stickstoff angereicherte Gasgemisch wird anschließend in den umschlossenen Raum geleitet, um dort die Sauerstoffkonzentration der Raumluftatmosphäre auf ein vorgegebenes Inertisierungsniveau abzusenken oder auf einem bereits eingestellten Inertisierungsniveau zu halten.

Das bei der Druckschrift EP 2 204 219 A1 zum Einsatz kommende Verfahren der Rückführung der sauerstoffreduzierten Atmosphäre im Brandschutz zur effektiveren Stickstoffgenerierung setzt in der Praxis ein an das zum Einsatz kommende Gasseparationssystem möglichst optimal angepasstes Rückführungsverfahren voraus. Insbesondere ist Sorge zu tragen, dass das in der Mischkammer bereitgestellte Anfangs-Gasgemisch stets in einem für das zum Einsatz kommende Gasseparationssystem optimalen Zustand vorliegt. Diese Anforderung kommt insbesondere dann zur Geltung, wenn als Gasseparationssystem mehrere Stickstoffgeneratoren mit jeweils einem zugeordneten Kompressor zum Einsatz kommen. Insbesondere dann ist Sorge zu tragen, dass das jeweilige Ansaugverhalten eines jeden einzelnen Stickstoffgenerators rückwirkungsfrei für alle anderen Stickstoffgeneratoren erfolgt. Hierbei ist zu berücksichtigen, dass ein Stickstoffgenerator, bei welchem zur Gasseparation eine Membrantechnik zum Einsatz kommt, ein konstantes Ansaugverhalten zeigt. Kommt hingegen ein Stickstoffgenerator zum Einsatz, bei welchem zur Gasseparation die sogenannte PSA-Technologie oder die sogenannte VPSA-Technologie zum Einsatz kommt, ist zu berücksichtigen, dass das Ansaugverhalten eines derartigen Stickstoffgenerators pulsartig erfolgt.

Insbesondere bei großvolumigen Räumen, wie etwa Lagerhallen, ist es häufig erwünscht, dass zum Einstellen und Halten eines vorgegebenen bzw. vorgebbaren Inertisierungsniveaus parallel mehrere Stickstoffgeneratoren zum Einsatz kommen, wobei bei diesen Stickstoffgeneratoren unter Umständen unterschiedliche Technologien zur Gasseparation verwendet werden. In solch einem Fall ist eine aufwändige und für jeden Stickstoffgenerator eigenständige Rückführungslinie aus dem umschlossenen Raum zu jedem Stickstoffgenerator hin erforderlich, um den optimalen Betrieb des Stickstoffgenerators sicherzustellen. Diese Anforderung führt zu einem relativ komplexen Aufbau der Inertisierungsanlage.

Ausgehend von dieser Problemstellung, liegt der vorliegenden Erfindung die Aufgabe zugrunde, die aus der Druckschrift EP 2 204 219 A1 bekannte Inertisierungsanlage bzw. das aus der Druckschrift EP 2 204 219 A1 bekannte Inertisierungsverfahren derart weiterzubilden, dass in einer möglichst einfachen aber effizienten Weise in dem umschlossenen Raum ein vorab festgelegtes Inertisierungsniveau eingestellt und aufrechterhalten werden kann. Insbesondere soll eine Lösung angegeben werden, mit welcher auch bei relativ großvolumigen Räumen, wie etwa Lagerhallen, in einer einfach zu realisierenden aber dennoch effektiven Weise die bei der Inertisierung anfallenden Betriebskosten reduziert werden können.

Im Hinblick auf das Verfahren wird diese Aufgabe mit einem Inertisierungsverfahren der eingangs genannten Art erfindungsgemäß dadurch gelöst, dass eine in dem Rückführleitungssystem vorgesehene Ventilatoreinrichtung und/oder eine in dem Frischluft-Zuführleitungssystem vorgesehene Ventilatoreinrichtung derart angesteuert werden, dass die pro Zeiteinheit dem Raum entnommene und der Mischkammer zugeführte Menge an Raumluft und/oder die pro Zeiteinheit dem entnommenen Teil der Raumluft zugemischte Menge an Frischluft derart eingestellt werden, dass die Differenz zwischen dem in der Mischkammer herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet.

Im Hinblick auf die Vorrichtung wird die der Erfindung zugrunde liegende Aufgabe mit einer Inertisierungsanlage der eingangs genannten Art erfindungsgemäß dadurch gelöst, dass die Inertisierungsanlage in dem ersten Leitungssystem eine erste mit der Steuereinrichtung ansteuerbare Ventilatoreinrichtung und in dem zweiten Leitungssystem eine zweite mit der Steuereinrichtung ansteuerbare Ventilatoreinrichtung aufweist, wobei die Steuereinrichtung ausgelegt ist, die erste und/oder zweite Ventilatoreinrichtung derart anzusteuern, dass die mit Hilfe der ersten Ventilatoreinrichtung pro Zeiteinheit dem Raum entnommene und der Mischkammer zugeführte Menge an Raumluft und/oder die mit Hilfe der zweiten Ventilatoreinrichtung pro Zeiteinheit dem entnommenen Teil der Raumluft zugemischte Menge an Frischluft derart eingestellt wird, dass die Differenz zwischen dem in der Mischkammer herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet.

Die mit der erfindungsgemäßen Lösung erzielbaren Vorteile liegen auf der Hand. Es ist sichergestellt, dass das am Ausgang der Mischkammer bereitgestellte Anfangs-Gasgemisch stets in einem definierten und an das Gasseparationssystem optimal angepassten Zustand vorliegt. Die erfindungsgemäße Lösung erlaubt es insbesondere, dass bei dem Gasseparationssystem mehrere Stickstoffgeneratoren zum Einsatz kommen, wobei diesen mehreren Stickstoffgeneratoren auch unterschiedliche Technologien zur Gasseparation zu Grunde liegen können. Insbesondere ist mit der erfindungsgemäßen Lösung sichergestellt, dass das jeweilige Ansaugverhalten der ggf. mehreren zum Einsatz kommenden Stickstoffgeneratoren rückwirkungsfrei für die Stickstoffgeneratoren erfolgt. Demzufolge ist es ohne Weiteres möglich, die erfindungsgemäße Lösung auch als Feuerlöschanlage bzw. als präventiven Brandschutz für großvolumige Räume, wie etwa Lagerhallen, einzusetzen, wenn dort mehrere und ggf. verschiedene Stickstoffgeneratoren zur Gasseparation eingesetzt werden, ohne dass für jeden Stickstoffgenerator eine aufwändige, eigenständige und geregelte Rückführungslinie aus dem Schutzraum zu dem betreffenden Stickstoffgenerator hin benötigt wird. Demgemäß vermeidet die in der erfindungsgemäßen Lösung vorgeschlagene angepasste Rückführungsmethode einen erhöhten Aufwand zur Realisierung der erfindungsgemäßen Inertisierungsanlage.

Vorteilhafte Weiterbildungen der erfindungsgemäßen Lösung sind in den Unteransprüchen angegeben.

In einer bevorzugten Realisierung der erfindungsgemäßen Lösung ist vorgesehen, dass der obere Schwellwert für den Differenzdruck bei 1,0 mbar und vorzugsweise bei 0,5 mbar liegt, wobei der untere Schwellwert für den Differenzdruck vorzugsweise bei 0,0 mbar liegt. Indem die Differenz zwischen dem in der Mischkammer herrschenden Druck und dem Außenatmosphärendruck in diesem angegebenen Bereich eingestellt wird, ist stets sichergestellt, dass das jeweilige Ansaugverhalten der zum Einsatz kommenden Stickstoffgeneratoren (konstantes Ansaugverhalten bei einem Stickstoffgenerator, bei welchem zur Gasseparation die Membrantechnologie zum Einsatz kommt bzw. pulsartiges Ansaugverhalten bei einem Stickstoffgenerator, bei welchem zur Gasseparation die PSA- bzw. VPSA-Technologie zum Einsatz kommt) rückwirkungsfrei für den Stickstoffgenerator erfolgt. Selbstverständlich sind aber auch andere Werte für den oberen bzw. unteren Schwellwert denkbar.

In einer besonders bevorzugten Realisierung der erfindungsgemäßen Lösung ist vorgesehen, dass in einem ersten Leitungssystem, über welches in einer von der Steuereinrichtung geregelten Weise ein Teil der in dem umschlossenen Raum enthaltenen Raumluft dem Raum entnommen und der Mischkammer zugeführt wird, eine erste mit der Steuereinrichtung ansteuerbare Ventilatoreinrichtung vorgesehen ist. Ferner ist es von Vorteil, wenn in einem zweiten Leitungssystem, über welches in einer geregelten Weise Frischluft der Mischkammer zugeführt wird, eine zweite mit der Steuereinrichtung ansteuerbare Ventilatoreinrichtung vorgesehen ist. Die Steuereinrichtung sollte dabei ausgelegt sein, die erste und/oder zweite Ventilatoreinrichtung derart anzusteuern, dass die Menge der pro Zeiteinheit dem Raum entnommenen Raumluft identisch ist mit der Menge des mit Stickstoff angereicherten Gasgemisches, welche pro Zeiteinheit der Raumatmosphäre des umschlossenen Raumes zugeführt wird.

Vorzugsweise wird die Menge der Frischluft, welche in der Mischkammer der dem Raum entnommenen Raumluft pro Zeiteinheit zugemischt wird, so gewählt, dass die Menge der pro Zeiteinheit dem Raum entnommenen Raumluft identisch ist mit der Menge des mit Stickstoff angereicherten Gasgemisches, welches pro Zeiteinheit in die Raumatmosphäre des umschlossenen Raumes geleitet wird. Hiermit wird sichergestellt, dass durch das Einleiten des mit Stickstoff angereicherten Gasgemisches in die Raumatmosphäre des umschlossenen Raumes bzw. durch das Abführen/Rückführen der Raumluft aus dem umschlossenen Raum kein Über- bzw. Unterdruck eingestellt wird.

Zum Bereitstellen des Anfangs-Gasgemisches ist es bevorzugt, wenn eine Mischstrecke vorgesehen ist, in welcher vorzugsweise über ein Y-Stück das erste Leitungssystem, über welches in geregelter Weise ein Teil der in dem umschlossenen Raum enthaltenen Raumluft dem Raum entnommen wird, und das zweite Leitungssystem, über welches in geregelter Weise Frischluft zugeführt wird, münden. Diese Mischstrecke ist entweder in der Mischkammer integriert oder der Mischkammer vorgeschaltet. Die Mischstrecke dient zum Vermischen der dem umschlossenen Raum entnommenen Raumluft mit der zugeführten Frischluft und ist ― um eine optimale Durchmischung sicherstellen zu können ― derart konfiguriert, dass sich in der Mischstrecke eine turbulente Strömung einstellt. Hierfür ist es denkbar, den effektiven Strömungsquerschnitt der Mischstrecke entsprechend zu reduzieren, derart, dass sich für die in die Mischstrecke eingeleitete Frischluft und die ebenfalls in die Mischstrecke eingeleitete rückgeführte Raumluft eine Strömungsgeschwindigkeit einstellt, die größer ist als die von der Reynolds-Zahl abhängige charakteristische Grenzgeschwindigkeit. Alternativ oder zusätzlich hierzu ist es denkbar, dass in der Mischstrecke Spoiler-Elemente vorgesehen sind, um eine turbulente Strömung in der Mischstrecke zu induzieren.

Bei der zuletzt genannten Ausführungsform, bei welcher zum turbulenten Vermischen der rückgeführten Raumluft und der zugeführten Frischluft eine in der Mischkammer integrierte oder der Mischkammer vorgeschaltete Mischstrecke vorgesehen ist, ist es besonders bevorzugt, wenn die Mischstrecke eine hinreichende Länge aufweist, um ein möglichst vollständiges und gleichmäßiges Vermischen der rückgeführten Raumluft und der zugeführten Frischluft bewirken zu können. Besonders bevorzugt hierbei ist es, wenn die Mischstrecke eine Länge aufweist, die mindestens das 5-fache des hydraulischen Durchmessers der Mischstrecke ist. Der hydraulische Durchmesser ist eine theoretische Größe, um Berechnungen an Rohren oder Kanälen mit nicht kreisförmigen Querschnitt durchzuführen. Mit diesem Term kann dann wie bei einem runden Rohr gerechnet werden. Er ist der Quotient aus dem vierfachen Strömungsquerschnitt und dem vom Fluid benetzten Umfang (ggf. innen und außen) eines Messquerschnitts.

In einer besonders bevorzugten Realisierung der erfindungsgemäßen Lösung ist vorgesehen, dass das Gasseparationssystem mindestens einen und vorzugsweise eine Vielzahl von Stickstoffgeneratoren mit jeweils einem zugeordneten und über ein Leitungssystem mit der Mischkammer verbundenen Kompressor aufweist. Bei jedem Stickstoffgenerator ist mit Hilfe der Steuereinrichtung der Sauerstoffrestgehalt des am Ausgang des Stickstoffgenerators bereitgestellten und mit Stickstoff angereicherten Gasgemisches einstellbar. Diese Realisierung eignet sich insbesondere als Raumschutz für einen großvolumigen Raum, wie etwa eine Lagerhalle.

Im Hinblick auf die bei der erfindungsgemäßen Lösung zum Einsatz kommende Mischkammer ist es von Vorteil, wenn diese ein Volumen aufweist, welches von der Anzahl der bei der Inertisierungsanlage zum Einsatz kommenden Stickstoffgeneratoren und/oder von dem Prinzip abhängt, auf welchem die Funktionsweise des mindestens einen Stickstoffgenerators basiert. Insbesondere ist die Mischkammer im Hinblick auf ihr Volumen so zu wählen, dass das jeweilige Ansaugverhalten der zum Einsatz kommenden Stickstoffgeneratoren rückwirkungsfrei für alle Stickstoffgeneratoren erfolgt.

Hierbei sollte die Mischkammer ferner derart ausgelegt sein, dass die in der Mischkammer maximal auftretbare Strömungsgeschwindigkeit im Durchschnitt geringer als 0,1 m/s ist. Dies wird durch eine geeignete Wahl des hydraulischen Querschnitts der Mischkammer erreicht.

In einer bevorzugten Realisierung des erfindungsgemäßen Inertisierungsverfahren ist vorgesehen, dass der Sauerstoffrestgehalt des mit Stickstoff angereicherten Gasgemisches bzw. die Stickstoff-Reinheit des Gasseparationssystems vorzugsweise automatisch gemäß einer vorab ermittelten Kennlinie eingestellt wird. Diese Kennlinie gibt den zeitoptimierten Verlauf des Sauerstoffrestgehaltes in dem mit Stickstoff angereicherten Gasgemisch gegenüber dem Sauerstoffgehalt in der Raumatmosphäre des umschlossenen Raums an. Hierbei sind unter dem Ausdruck "zeitoptimierter Verlauf des Sauerstoffrestgehaltes" die von dem Sauerstoffgehalt in der Raumatmosphäre des umschlossenen Raumes abhängigen zeitoptimierten Werte des Sauerstoffrestgehaltes zu verstehen. Wie bereits angedeutet, entspricht der zeitoptimierte Wert des Sauerstoffrestgehaltes dem Wert des Sauerstoffrestgehaltes, der bei dem Gasseparationssystem zu wählen ist, damit mit Hilfe des Inertisierungsverfahrens in der Raumatmosphäre des umschlossenen Raumes innerhalb kürzester Zeit ein vorgebbarer und im Vergleich zur normalen Umgebungsluft reduzierter Sauerstoffgehalt einstellbar ist.

Die Kennlinie, nach welcher bei der bevorzugten Realisierung des erfindungsgemäßen Inertisierungsverfahren der Sauerstoffrestgehalt abhängig von dem in der Raumatmosphäre des umschlossenen Raumes aktuell herrschenden Sauerstoffgehalt eingestellt wird, ist für das Gasseparationssystem bzw. die Inertisierungsanlage vorab ermittelt (gemessen oder berechnet) worden.

Da bei der erfindungsgemäßen Lösung die Stickstoff-Reinheit des Gasseparationssystems bzw. der Sauerstoffrestgehalt in dem mit Stickstoff angereicherten Gasgemisch vorzugsweise automatisch abhängig von dem in der Raumatmosphäre des umschlossenen Raumes aktuell herrschenden Sauerstoffgehalt eingestellt wird, um auf diese Weise mit möglichst geringen Betriebskosten eine Inertisierung des Raumes vornehmen zu können, ist es bevorzugt, wenn kontinuierlich oder zu vorgegebenen Zeiten und/oder Ereignissen der aktuelle Sauerstoffgehalt in der Raumatmosphäre des umschlossenen Raumes entweder direkt oder indirekt gemessen wird. Ferner ist es bevorzugt, wenn kontinuierlich oder zu vorgegebenen Zeiten und/oder Ereignissen der Sauerstoffrestgehalt in dem mit Stickstoff angereicherten Gasgemisch auf einen vorab festgelegten, zeitoptimierten Wert eingestellt wird. Dieser vorab festgelegte, zeitoptimierte Wert sollte einem Sauerstoffrestgehalt entsprechen, bei welchem mit dem Inertisierungsverfahren der Sauerstoffgehalt in der Raumatmosphäre des umschlossenen Raumes innerhalb kürzester Zeit um einen vorgegebenen Absenkungsbetrag auf den jeweils aktuellen Sauerstoffgehalt absenkbar ist.

In einer bevorzugten Weiterentwicklung der erfindungsgemäßen Lösung ist vorgesehen, dass nicht nur die Stickstoff-Reinheit des Gasseparationssystems abhängig von dem in der Raumatmosphäre des umschlossenen Raumes aktuell herrschenden Sauerstoffgehalt verändert wird, sondern dass auch der Sauerstoffgehalt in dem Anfangs-Gasgemisch abhängig von dem in der Raumatmosphäre des umschlossenen Raumes aktuell herrschenden Sauerstoffgehalt verändert wird. Hierbei wird die Kenntnis ausgenutzt, dass der Luftfaktor des Gasseparationssystems herabgesetzt werden kann, wenn das Anfangs-Gasgemisch, mit welchem das Gasseparationssystem versorgt wird, einen reduzierten Sauerstoffgehalt aufweist.

Demnach ist in einer bevorzugten Realisierung der erfindungsgemäßen Lösung vorgesehen, dass zum Bereitstellen des Anfangs-Gasgemisches ein Teil der in dem umschlossenen Raum enthaltenen Raumluft in geregelter Weise dem Raum entnommen und dem entnommenen Teil der Raumluft in geregelter Weise Frischluft zugeführt wird. Um dabei zu verhindern, dass sich der Druck im Inneren des umschlossenen Raumes durch die Zufuhr von mit Stickstoff angereichertem Gas bzw. durch das Abführen von einem Teil der Raumluft verändert, ist die Menge der Frischluft, die der dem Raum entnommenen Raumluft zugemischt wird, so gewählt, dass die Menge der pro Zeiteinheit dem Raum entnommenen Raumluft identisch ist mit der Menge des mit Stickstoff angereicherten Gasgemisches, welches am Ausgang des Gasseparationssystems bereitgestellt und pro Zeiteinheit in die Raumatmosphäre des umschlossenen Raumes geleitet wird.

Im Folgenden werden exemplarische Ausführungsformen der erfindungsgemäßen Inertisierungsanlage anhand der beigefügten Zeichnungen beschrieben.

Es zeigen:
- Fig. 1: eine schematische Ansicht einer Inertisierungsanlage gemäß einer ersten Ausführungsform der vorliegenden Erfindung;
- Fig. 2: eine schematische Ansicht einer Inertisierungsanlage gemäß einer zweiten Ausführungsform der vorliegenden Erfindung;
- Fig. 3: eine schematische Ansicht einer Inertisierungsanlage gemäß einer dritten Ausführungsform der vorliegenden Erfindung;
- Fig. 4: eine schematische Ansicht einer Inertisierungsanlage gemäß einer vierten Ausführungsform der vorliegenden Erfindung;
- Fig. 5: eine graphische Darstellung des Luftfaktors gegenüber der Stickstoff-Reinheit bei der Inertisierungsanlage gemäß Fig. 1, Fig. 2, Fig. 3 oder Fig. 4, sowie eine graphische Darstellung der Absenkzeit gegenüber der Stickstoff-Reinheit, und zwar bei der Absenkung des Sauerstoffgehaltes von ursprünglich 17,4 Vol.-% auf 17,0 Vol.-% sowie bei einer Absenkung des Sauerstoffgehaltes von ursprünglich 13,4 Vol.-% auf 13,0 Vol.-%;
- Fig. 6: eine graphische Darstellung der zeitoptimierten Stickstoff-Reinheit gegenüber dem aktuellen Sauerstoffgehalt in der Raumatmosphäre des umschlossenen Raumes bei der Inertisierungsanlage gemäß Fig. 1, Fig. 2, Fig. 3 oder Fig. 4;
- Fig. 7: eine graphische Darstellung des Luftfaktors des Gasseparationssystems bei der Inertisierungsanlage gemäß Fig. 1, Fig. 2, Fig. 3 oder Fig. 4 ge- genüber dem Sauerstoffgehalt des Anfangs-Gasgemisches, welches dem Gasseparationssystem zugeführt wird, um zumindest ein Teil des Sauerstoffes aus dem Anfangs-Gasgemisch abzutrennen und auf diese Weise am Ausgang des Gasseparationssystems ein mit Stickstoff angereichertes Gasgemisch bereitzustellen; und
- Fig. 8: eine graphische Darstellung der erzielbaren Energieeinsparungen, wenn mit der erfindungsgemäßen Lösung in der Raumatmosphäre des umschlossenen Raumes der Sauerstoffgehalt abgesenkt wird.

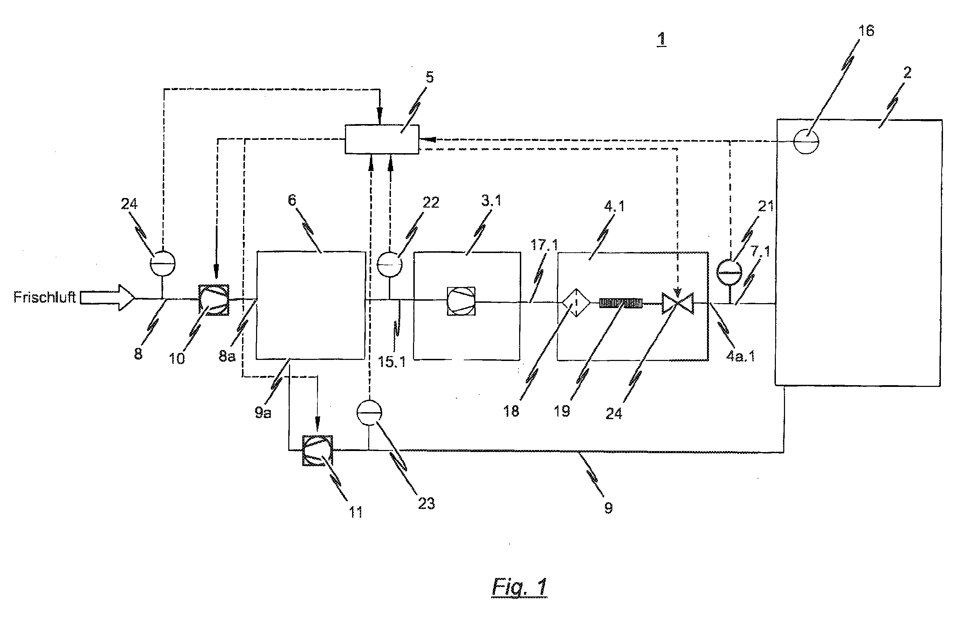

Fig. 1 zeigt in einer schematischen Darstellung einer ersten beispielhaften Ausführungsform einer Inertisierungsanlage 1 gemäß der vorliegenden Erfindung. Die dargestellte Inertisierungsanlage 1 dient zum Einstellen und Halten eines vorgebbaren Inertisierungsniveaus in der Raumatmosphäre eines umschlossenen Raumes 2. Der umschlossene Raum 2 kann beispielsweise eine Lagerhalle sein, bei welcher als präventive Brandschutzmaßnahme der Sauerstoffgehalt in der Raumluft auf ein bestimmtes Inertisierungsniveau von beispielsweise 12 Vol.-% oder 13 Vol.-% Sauerstoffgehalt abgesenkt und gehalten wird.

Die Inertisierung des umschlossenen Raumes 2 wird mit Hilfe einer Steuereinrichtung 5 wahlweise automatisch durchgeführt. Hierzu weist die Inertisierungsanlage 1 gemäß der in Fig. 1 dargestellten Ausführungsform ein Gasseparationssystem bestehend aus einem Kompressor 3.1 sowie einem Stickstoffgenerator 4.1 auf. Der Kompressor 3.1 dient dazu, dem Stickstoffgenerator 4.1 in komprimierter Weise ein Anfangs-Gasgemisch bereitzustellen, welches zumindest die Komponenten Sauerstoff und Stickstoff aufweist. Hierzu ist der Ausgang des Kompressors 3.1 über ein Leitungssystem 17.1 mit dem Eingang des Stickstoffgenerators 4.1 verbunden, um dem Stickstoffgenerator 4.1 mit dem komprimierten Anfangs-Gasgemisch zu versorgen. Denkbar ist es, dass am Ausgang des Kompressors 3.1 das Anfangs-Gasgemisch auf einen Druck von beispielsweise 7,5 bis 9,5 bar und vorzugsweise 8,8 bar komprimiert ist.

Der Stickstoffgenerator 4.1 weist mindestens ein Membranmodul 19, beispielsweise ein Hohlfasermembranmodul auf, durch welches das von dem Kompressor 3.1 bereitgestellte Anfangs-Gasgemisch ― nachdem dieses einen geeigneten Filter 18 passiert hat ― gedrückt wird. In dem Membranmodul 19 diffundieren die verschiedenen in dem Anfangs-Gasgemisch enthaltenden Komponenten (insbesondere Sauerstoff und Stickstoff) entsprechend ihrer molekularen Struktur unterschiedlich schnell durch die Hohlfasermembrane des Membranmoduls 19. Die Gasseparation basiert dabei auf dem an sich bekannten Wirkungsprinzip, wonach Stickstoff mit einem niedrigen Diffusionsgrad die Hohlfasermembrane sehr langsam durchdringt und sich auf diese Weise beim Durchströmen der Hohlfasern des Membranmoduls 19 anreichert. Am Ausgang 4a.1 des Stickstoffgenerators 4.1 wird auf diese Weise ein mit Stickstoff angereichertes Gasgemisch bereitgestellt. Dieses mit Stickstoff angereicherte Gasgemisch liegt ― wie auch das am Eingang des Stickstoffgenerators 4.1 eingespeiste Anfangs-Gasgemisch ― in komprimierter Form vor, wobei allerdings das Durchströmen des mindestens einen Membranmoduls 19 des Stickstoffgenerators 4.1 zu einem Druckverlust von beispielsweise 1,5 bis 2,5 bar führt.

Obwohl in Fig. 1 nicht explizit dargestellt, wird das im Stickstoffgenerator 4.1 abgeschiedene und mit Sauerstoff angereicherte Gasgemisch gesammelt und unter atmosphärischem Druck in die Umgebung abgeblasen.

Das am Ausgang 4a.1 des Stickstoffgenerators 4.1 bereitgestellte und mit Stickstoff angereicherte Gasgemisch wird über eine Zuführleitung 7.1 dem umschlossenen Raum 2 zugeführt, um den Sauerstoffgehalt in der Raumatmosphäre des umschlossenen Raumes 2 abzusenken bzw. um ein in dem Raum 2 bereits eingestelltes Absenkungsniveau durch Nachführen von mit Stickstoff angereichertem Gas aufrechtzuerhalten.

Damit sich der Druck im Inneren des umschlossenen Raumes 2 beim Zuführen von dem mit Stickstoff angereicherten Gasgemisch nicht ändert, kann eine geeignete Druckentlastung vorgesehen sein. Diese kann beispielsweise in Gestalt von sich selbstständig öffnenden bzw. schließenden Druckentlastungsklappen (in Fig. 1 nicht dargestellt) ausgeführt sein. Andererseits ist es aber auch denkbar, dass das bei der Inertisierung des Raumes 2 zum Zwecke der Druckentlastung abzuführende Raumluftvolumen über ein Rückführleitungssystem 9 einer Mischkammer 6 zugeführt wird.

Die aus dem umschlossenen Raum 2 abgeführte Raumluft wird über einen ersten Eingang 9a der Rückführleitung 9 der Mischkammer 6 zugeführt. Die Mischkammer 6 weist ferner einen zweiten Eingang 8a auf, in welchem ein Zufuhrleitungssystem 8 zum Zuführen von Frischluft zu der Mischkammer 6 mündet. In der Mischkammer 6 wird das Anfangs-Gasgemisch bereitgestellt, welches mit Hilfe des Kompressors 3.1 komprimiert wird, und aus welchem in dem Gasseparationssystem (Stickstoffgenerator 4.1) zumindest ein Teil des Sauerstoffs abgetrennt wird. Aus diesem Grund ist der Ausgang der Mischkammer 6 mit dem Eingang des Kompressors 3.1 über ein geeignetes Leitungssystem 15.1 verbunden.

Im Einzelnen ist in dem Rückführleitungssystem 9 eine erste mit der Steuereinrichtung 5 ansteuerbare Ventilatoreinrichtung 11 und in dem Frischluft-Zuführleitungssystem 8 eine zweite ebenfalls mit der Steuereinrichtung 5 ansteuerbare Ventilatoreinrichtung 10 vorgesehen. Auf diese Weise kann durch eine geeignete Ansteuerung der entsprechenden Ventilatoreinrichtungen 10, 11 sichergestellt werden, dass die Menge der Frischluft, die der dem Raum 2 entnommenen Raumluft zugemischt wird, so gewählt ist, dass die Menge der pro Zeiteinheit dem Raum 2 entnommenen Raumluft identisch ist mit der Menge des am Ausgang 4a.1 des Stickstoffgenerators 4.1 bereitgestellten und mit Stickstoff angereicherten Gasgemisches, welche pro Zeiteinheit in die Raumatmosphäre des umschlossenen Raumes 2 geleitet wird.

Die Inertisierungsanlage 1 gemäß der in Fig. 1 schematisch dargestellten Ausführungsform der vorliegenden Erfindung zeichnet sich dadurch aus, dass die bereits erwähnte Steuereinrichtung 5 mit den entsprechenden ansteuerbaren Komponenten der Inertisierungsanlage 1 verbunden und ausgelegt ist, automatisch den Stickstoffgenerator 4.1 bzw. das Gasseparationssystem derart anzusteuern, dass das am Ausgang 4a.1 des Gasseparationssystems bereitgestellte und mit Stickstoff angereicherte Gasgemisch einen Sauerstoffrestgehalt aufweist, der von dem in der Raumatmosphäre des umschlossenen Raumes 2 aktuell herrschenden Sauerstoffgehalt abhängt. Insbesondere wird bei der dargestellten bevorzugten Realisierung der erfindungsgemäßen Inertisierungsanlage 1 mit Hilfe der Steuereinrichtung 5 der Stickstoffgenerator 4.1 derart angesteuert, dass abhängig von dem mit Hilfe eines Sauerstoffmesssystems 16 gemessenen Sauerstoffgehalt in der Raumatmosphäre des umschlossenen Raumes 2 das mit Stickstoff angereicherte Gasgemisch einen Sauerstoffrestgehalt zwischen 10,00 Vol.-% bis 0,01 Vol.-% aufweist, wobei der Sauerstoffrestgehalt des mit Stickstoff angereicherten Gasgemisches mit abnehmendem Sauerstoffgehalt in der Raumatmosphäre des umschlossenen Raumes 2 abnimmt.

Hierzu weist die erfindungsgemäße Inertisierungsanlage 1 neben dem bereits erwähnten Sauerstoffmesssystem 16 zum Messen bzw. Ermitteln des aktuellen Sauerstoffgehaltes in der Raumatmosphäre des umschlossenen Raumes 2 ferner ein Sauerstoffrestgehalt-Messsystem 21 zum Messen des Sauerstoffrestgehaltes in dem am Ausgang 4a.1 des Stickstoffgenerators 4.1 bereitgestellten und mit Stickstoff angereicherten Gasgemisch bzw. zum Bestimmen der Stickstoff-Reinheit des am Ausgang 4a.1 des Stickstoffgenerators 4.1 bereitgestellten Gasgemisches auf. Beide Messsysteme 16, 21 sind mit der Steuereinrichtung 5 entsprechend verbunden.

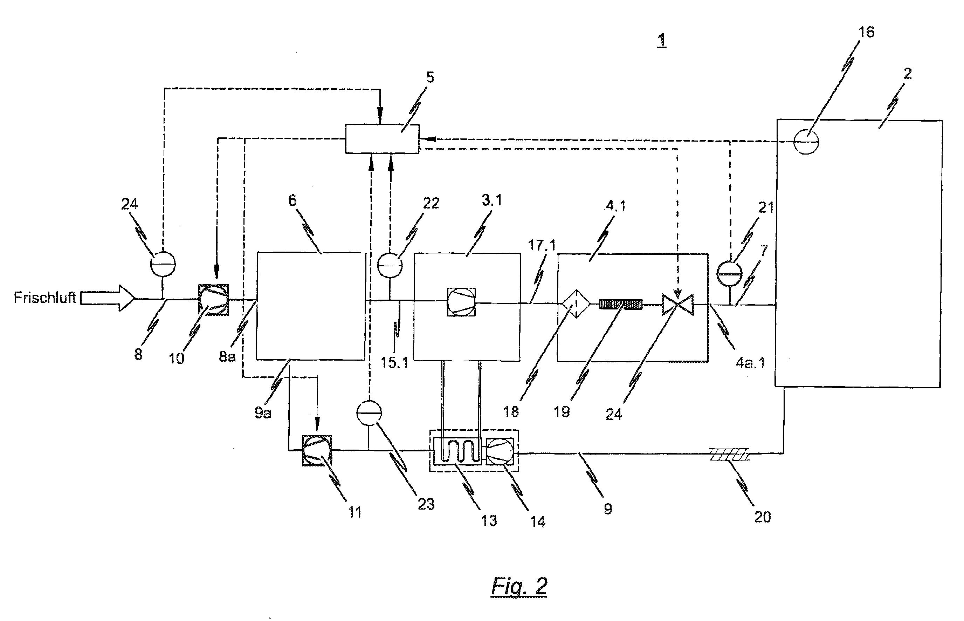

In Fig. 2 ist in einer schematischen Ansicht eine Inertisierungsanlage 1 gemäß einer zweiten Ausführungsform der vorliegenden Erfindung gezeigt. Die Inertisierungsanlage 1 gemäß der zweiten Ausführungsform eignet sich insbesondere dazu, in möglichst wirtschaftlicher Weise in einem klimatisierten Raum, wie etwa in einem Kühlraum oder in einer Kühllagerhalle, ein vorab festgelegtes Inertisierungsniveau einzustellen und aufrechtzuerhalten. Der Aufbau und die Funktionsweise der Inertisierungsanlage 1 gemäß der in Fig. 2 dargestellten Ausführungsform entsprechen im Wesentlichen dem Aufbau und der Funktionsweise der zuvor unter Bezugnahme auf Fig. 1 beschriebenen Inertisierungsanlage, so dass zur Vermeidung von Wiederholungen nachfolgend insbesondere auf die Unterschiede eingegangen werden soll.

Wie in Fig. 2 dargestellt, ist es für eine möglichst wirtschaftliche Inertisierung eines klimatisierten Raumes 2 bevorzugt, wenn in dem Rückführleitungssystem 9 zwischen dem Raum 2 und der Mischkammer 6 ein Wärmetauschersystem 13 vorgesehen ist. Ferner ist es von Vorteil, wenn ― wie in Fig. 2 angedeutet ― das Rückführleitungssystem 9 mit einer entsprechenden thermischen Isolierung 20 zumindest teilweise ummantelt, damit ein Vereisen des Rückführleitungssystems 9 vermieden werden kann, wenn die aus dem umschlossenen Raum 2 abgeführte, heruntergekühlte Raumluft über das Rückführleitungssystem 9 dem Wärmetauschersystem 13 zugeführt wird, bevor die Raumluft dann in die Mischkammer 6 geleitet wird. Das Wärmetauschersystem 13 kann bei Bedarf einen Stützventilator 14 aufweisen, damit die Raumluft ohne Druckverlust aus der Raumatmosphäre des umschlossenen Raumes 2 abgeführt werden kann.

Das Wärmetauschersystem 13 dient dazu, zumindest einen Teil der beim Betrieb des Kompressors 3.1 anfallenden Abwärme auszunutzen, um die abgeführte und heruntergekühlte Raumluft entsprechend aufzuwärmen. Für das Wärmetauschersystem 13 kommen unterschiedliche Systeme zum Einsatz, wie etwa ein Lamellenwärmetauscher, über den zumindest ein Teil der thermischen Energie des Abluft des Kompressors 3.1 über ein Wärmetauschermedium, wie beispielsweise Wasser, auf die abgeführten Raumluft übertragen wird, so dass die Temperatur der abgeführten Raumluft auf eine moderate Temperatur von beispielsweise 20° C aufzuwärmen, was für die Funktionsweise und den Wirkungsgrad des Stickstoffgenerators 4.1 von Vorteil ist.

Nachdem die aus dem umschlossenen Raum 2 abgeführte Raumluft das Wärmetauschersystem 13 passiert hat, wird sie über einen ersten Eingang 9a der Rückführleitung 9 der Mischkammer 6 zugeführt. Die Mischkammer 6 weist ferner einen zweiten Eingang 8a auf, in welchem ein Zufuhrleitungssystem 8 zum Zuführen von Frischluft zu der Mischkammer 6 mündet. In der Mischkammer 6 wird das Anfangs-Gasgemisch bereitgestellt, welches mit Hilfe des Kompressors 3.1 komprimiert wird, und aus welchem in dem Gasseparationssystem (Stickstoffgenerator 4.1) zumindest ein Teil des Sauerstoffs abgetrennt wird. Aus diesem Grund ist der Ausgang der Mischkammer 6 mit dem Eingang des Kompressors 3.1 über ein geeignetes Leitungssystem 15.1 verbunden.

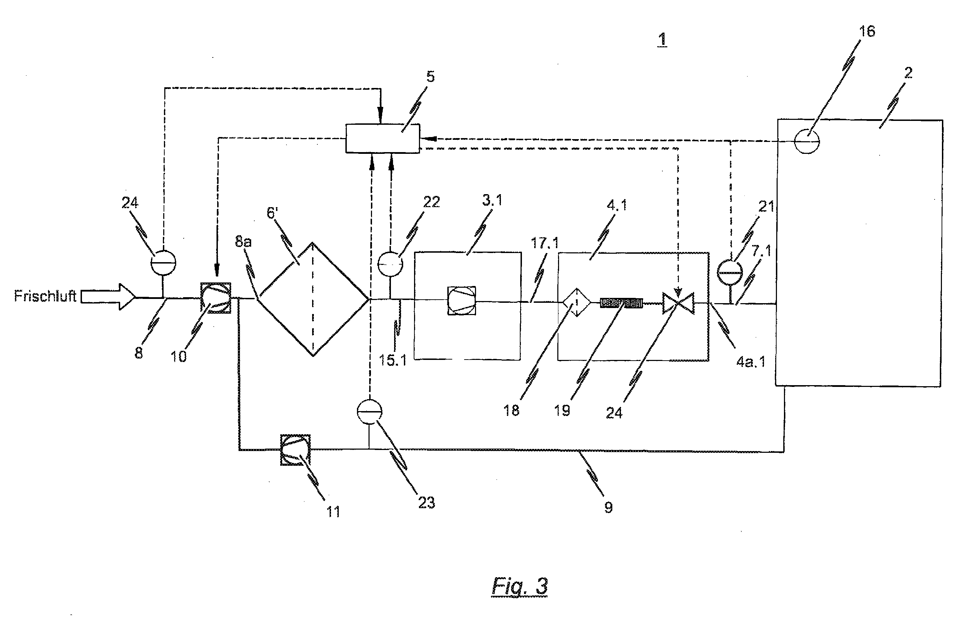

In Fig. 3 ist in einer schematischen Ansicht eine Inertisierungsanlage 1 gemäß einer dritten Ausführungsform der vorliegenden Erfindung gezeigt. Der Aufbau und die Funktionsweise der Inertisierungsanlage 1 gemäß der in Fig. 3 dargestellten Ausführungsform entsprechen im Wesentlichen dem Aufbau und der Funktionsweise der zuvor unter Bezugnahme auf Fig. 1 beschriebenen Inertisierungsanlage, so dass zur Vermeidung von Wiederholungen nachfolgend insbesondere auf die Unterschiede eingegangen werden soll.

Wie in Fig. 3 dargestellt, ist bei der dort dargestellten Ausführungsform die Mischkammer als Filter 6' realisiert. Die in Gestalt eines Filters 6' ausgeführte Mischkammer erfüllt demnach zwei Funktionen: Zum einen dient sie zum Bereitstellen des Anfangs-Gasgemisches, und zwar indem die über das Frischluft-Zuführleitungssystem zugeführte Frischluft mit der aus dem Raum 2 entnommenen und über das Rückführleitungssystem 9 zugeführten Raumluft vermischt wird. Zum anderen dient die als Filter 6' realisierte Mischkammer zum Filtern des bereitgestellten Anfangs-Gasgemisches, bevor dieses mit Hilfe des Kompressors 3.1 komprimiert wird. Somit kann auf einen zusätzlicher Filter am Eingang des Kompressors 3.1 verzichtet werden.

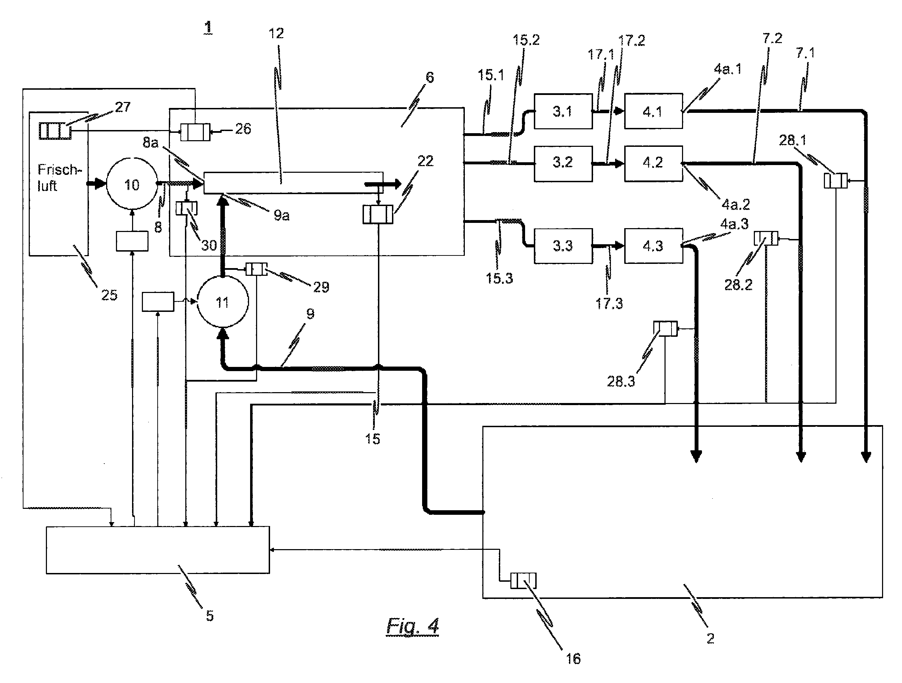

Nachfolgend wird unter Bezugnahme auf die Darstellung in Fig. 4 eine vierte exemplarische Ausführungsform der erfindungsgemäßen Inertisierungsanlage 1 beschrieben.

Der Aufbau und die Funktionsweise der Inertisierungsanlage 1 gemäß der vierten Ausführungsform sind im Wesentlichen identisch mit der zuvor unter Bezugnahme auf die Darstellung in Fig. 1 beschriebene Ausführungsform, allerdings kommen bei der Ausführungsform gemäß Fig. 4 mehrere parallel geschaltete Stickstoffgeneratoren 4.1, 4.2 und 4.3 zum Einsatz. Jedem Stickstoffgenerator 4.1, 4.2, 4.3 ist ein Kompressor 3.1, 3.2, 3.3 zugeordnet, welcher über ein entsprechendes Leitungssystem 15.1, 15.2, 15.3 mit der Mischkammer 6 verbunden ist, um das von dem zugehörigen Stickstoffgenerator 4.1, 4.2, 4.3 benötigte Anfangs-Gasgemisch aus der Mischkammer 6 abzusaugen und auf den für die optimale Betriebsweise des entsprechenden Stickstoffgenerators 4.1, 4.2, 4.3 notwendigen Druckwert zu komprimieren. Jeder bei der Inertisierungsanlage 1 gemäß der in Fig. 4 dargestellten Ausführungsform zum Einsatz kommende Stickstoffgenerator 4.1, 4.2, 4.3 ist über eine entsprechende Zuführleitung 7.1, 7.2, 7.3 mit dem umschlossenen Raum 2 verbunden. Demnach wird bei der in Fig. 4 dargestellten Ausführungsform das Gasseparationssystem durch die Komponenten "Stickstoffgenerator 4.1, 4.2, 4.3" und zugeordnetem "Kompressor 3.1, 3.2, 3.3" gebildet.

Wie auch bei den zuvor unter Bezugnahme auf die Darstellungen in den Figuren 1 bis 3 beschriebenen Ausführungsformen der erfindungsgemäßen Lösung kommt bei dem Ausführungsbeispiel gemäß Fig. 4 eine Rückführleitung 9 zum Einsatz. Wie dargestellt, ist in der Rückführleitung 9 eine erste Ventilatoreinrichtung 11 vorgesehen, welche von der Steuereinrichtung 5 entsprechend angesteuert werden kann, um in geregelter Weise einen Teil der Raumluft aus dem umschlossenen Raum 2 abzusaugen und der Mischkammer 6 zuzuführen. Ferner ist bei der in Fig. 4 dargestellten Ausführungsform eine Frischluft-Zuführleitung 8 vorgesehen, um Frischluft von einem Außenbereich 25 in geregelter Weise der Mischkammer 6 zuzuführen. Zu diesem Zweck ist in der Frischluft-Zuführleitung 8 eine mit der Steuereinrichtung 5 ansteuerbare zweite Ventilatoreinrichtung 10 vorgesehen.

Wie auch bei den zuvor beschriebenen Ausführungsbeispielen der erfindungsgemäßen Inertisierungsanlage 1 ist bei der in Fig. 4 dargestellten Ausführungsform eine Mischkammer 6 vorgesehen, um ein Anfangs-Gasgemisch bereitzustellen, welches Sauerstoff, Stickstoff und ggf. weitere Komponenten aufweist. Das in der Mischkammer 6 bereitgestellte Anfangs-Gasgemisch wird über entsprechende Leitungssysteme 15.1, 15.2, 15.3 den jeweiligen Kompressoren 3.1, 3.2, 3.3 des Gasseparationssystems zugeführt.

Damit das von der Mischkammer 6 bereitgestellte Anfangs-Gasgemisch in einem im Hinblick auf die jeweiligen zum Einsatz kommenden Stickstoffgeneratoren 4.1, 4.2, 4.3 optimalen Zustand vorliegt, ist bei der in Fig. 4 dargestellten Ausführungsform der erfindungsgemäßen Inertisierungsanlage 1 eine in der Mischkammer 6 integrierte Mischstrecke 12 vorgesehen. Diese Mischstrecke 12 muss nicht zwangsläufig in der Mischkammer 6 integriert sein, sondern kann auch der Mischkammer 6 vorgeschaltet sein.

Im Einzelnen mündet bei der in Fig. 4 gezeigten Ausführungsform die Rückführungsleitung 9 einerseits und die Frischluft-Zuführleitung 8 andererseits in dieser Mischstrecke 12. Obwohl in Fig. 4 nicht explizit dargestellt, ist es bevorzugt, wenn hierzu das Ende 9a der Rückführleitung 9 und das Ende 8a der Frischluft-Zuführleitung 8 über ein Y-Stück vorzugsweise am stromaufwärts liegenden Endbereich der Mischstrecke 12 in die Mischstrecke 12 münden.

Die Mischstrecke 12 dient zum optimalen Vermischen der über die Zuführleitung 8 zugeführten Frischluft mit der über die Rückführleitung 9 zugeführten Raumluft. Zu diesem Zweck ist es bevorzugt, wenn die Mischstrecke 12 derart dimensioniert ist, dass im Inneren der Mischstrecke 12 eine turbulente Strömung entsteht. Dies kann beispielsweise erreicht werden, indem der effektive Strömungsquerschnitt der Mischstrecke 12 derart reduziert wird, dass sich in der Mischstrecke 12 eine Strömungsgeschwindigkeit einstellt, welche größer als die für das Ausbilden einer turbulenten Strömung charakteristische und von der entsprechenden Reynolds-Zahl abhängige Grenzgeschwindigkeit ist. Alternativ oder zusätzlich hierzu ist es gleichwohl denkbar, innerhalb der Mischstrecke 12 geeignete Spoiler-Elemente vorzusehen, welche im in der Mischstrecke 12 eine turbulente Strömung induzieren.

Wie es der schematischen Darstellung in Fig. 4 entnommen werden kann, weist die Mischstrecke 12 eine hinreichende Länge auf, um ein optimales Durchmischen der am stromaufwärts liegenden Endbereich zugeführten Frisch- und Raumluft bis zum stromabwärts liegenden Endbereich der Mischstrecke erzielen zu können. Bei experimentellen Versuchen hat es sich gezeigt, dass es von Vorteil ist, wenn die Mischstrecke 12 eine Länge aufweist, die mindestens dem 5-fachen des effektiven Strömungsquerschnittes der Mischstrecke 12 entspricht.

Am stromabwärts liegenden Endbereich der Mischstrecke 12 wird die von dem umschlossenen Raum 2 über die Rückführleitung 9 zurückgeführte und in der Mischstrecke 12 mit der zugeführten Frischluft optimal durchmischte Raumluft in die Mischkammer 6 geleitet. Im Unterschied zu der Mischstrecke 12 weist die Mischkammer 6 einen deutlich vergrößerten effektiven Strömungsquerschnitt auf, um eine Strömungsberuhigung herbeiführen zu können. Insbesondere ist es notwendig, dass das in der Mischkammer 6 letztendlich bereitgestellte Anfangs-Gasgemisch stets in einem für die zum Einsatz kommenden Stickstoffgeneratoren 4.1, 4.2, 4.3 optimalen Zustand vorliegt. Dies bedeutet insbesondere, dass die Differenz zwischen dem in der Mischkammer 6 herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet. Darüber hinaus sollte die in der Mischkammer 6 maximal auftretbare Strömungsgeschwindigkeit im Durchschnitt geringer als 0,1 m/s sein.

Um diese im Hinblick auf das Anfangs-Gasgemisch zu beachtenden Bedingungen einhalten zu können, ist bei der in Fig. 4 dargestellten Ausführungsform der erfindungsgemäßen Inertisierungsanlage 1 im Inneren der Mischkammer 6 ein Drucksensor 26 vorgesehen. Mit diesem Drucksensor 26 wird kontinuierlich oder zu vorgegebenen Zeiten bzw. Ereignissen der im Inneren der Mischkammer 6 herrschende Druck gemessen und der Steuereinrichtung 5 zugeführt. Die Steuereinrichtung 5 vergleicht den in der Mischkammer 6 gemessenen Druckwert mit dem Druckwert der Außenatmosphäre und steuert in Abhängigkeit von dem Vergleich dieser beiden Druckwerte die erste und/oder zweite Ventilatoreinrichtung 11, 10 entsprechend an, um zu erreichen, dass die Differenz zwischen dem in der Mischkammer 6 herrschenden Druck und dem Außenatmosphärendruck den vorgegebenen oder vorgebbaren oberen Schwellwert nicht überschreitet und den vorgegebenen oder vorgebbaren unteren Schwellwert nicht unterschreitet. Der Vollständigkeit halber sei darauf hingewiesen, dass in dem Außenbereich 25 ein entsprechender Drucksensor 27 vorgesehen ist, um kontinuierlich oder zu vorgegebenen Zeiten bzw. Ereignissen den Druck im Außenbereich 25 zu erfassen und der Steuereinrichtung 5 zuzuführen. Alternativ könnte der Drucksensor 26 auch ein Differenzdrucksensor sein.

Bei der in Fig. 4 dargestellten Ausführungsform der erfindungsgemäßen Inertisierungsanlage 1 ist die Steuereinrichtung 5 ausgelegt, die erste Ventilatoreinrichtung 11 und/oder die zweite Ventilatoreinrichtung 10 derart anzusteuern, dass die Differenz zwischen dem in der Mischkammer 6 herrschenden Druck und dem Außenatmosphärendruck maximal 0,1 mbar und vorzugsweise maximal 0,5 mbar beträgt.

Wie es der Darstellung in Fig. 4 entnommen werden kann, kommen zum Zwecke der Gasseparation insgesamt drei Stickstoffgeneratoren 4.1, 4.2, 4.3 zum Einsatz. Denkbar hierbei ist es, dass die Stickstoffgeneratoren 4.1, 4.2, 4.3 teilweise oder jeweils auf einer unterschiedlichen Gasseparations-Technik basieren. So ist es beispielsweise denkbar, dass bei dem ersten Stickstoffgenerator 4.1 zur Gasseparation eine Trennmembran zum Einsatz kommt. Dann ist der dem ersten Stickstoffgenerator 4.1 zugeordnete Kompressor 3.1 entsprechend an den am Eingang des Stickstoffgenerators 4.1 anzulegenden Druck (z. B. 13 bar) anzupassen. Bei dem zweiten Stickstoffgenerator 4.2 kann zum Zwecke einer Gasseparation beispielsweise die PSA-Technik zum Einsatz kommen. In diesem Fall ist der zugeordnete Kompressor 3.2 entsprechend auszulegen, wobei dieser beispielsweise einen Ausgangsdruck von 8 bar zu liefern hat. Der weitere bei dem Ausführungsbeispiel gemäß Fig. 4 zum Einsatz kommende Stickstoffgenerator 4.3 kann beispielsweise ein Stickstoffgenerator sein, der auf der VPSA-Technik basiert. Dann ist der zugeordnete Kompressor 3.3 derart auszulegen, dass dieser an seinem Ausgang Niederdruck liefert.

Demnach kommt bei dem in Fig. 4 dargestellten Ausführungsbeispiel als Gasseparationssystem eine Kombination von verschiedenen Stickstoffgeneratoren 4.1, 4.2, 4.3 zum Einsatz, wobei die jeweiligen den Stickstoffgeneratoren 4.1, 4.2, 4.3 zugeordneten Kompressoren 3.1, 3.2, 3.3 an die entsprechende Funktionsweise des Stickstoffgenerators angepasst sind.

Um eine optimale Funktionsweise des Gasseparationssystems sicherstellen zu können, muss die Mischkammer 6 groß genug ausgebildet sein, damit bei Betrieb der einzelnen Kompressoren 3.1, 3.2, 3.3 keine unzulässigen Druckschwankungen auftreten und insbesondere keine Rückwirkungen auf die zum Einsatz kommenden Stickstoffgeneratoren 4.1, 4.2, 4.3 auftreten können. Wie bereits angedeutet, liegt der maximale Wert an zulässigen Druckschwankungen vorzugsweise bei 1,0 mbar und noch bevorzugter bei 0,5 mbar.

Obwohl in Fig. 4 nicht explizit dargestellt, ist es bevorzugt, wenn die jeweiligen Leitungssysteme 15.1, 15.2, 15.3, welche die entsprechenden Kompressoren 3.1, 3.2, 3.3 mit der Mischkammer 6 verbinden, über geeignet dimensionierte Ansaugöffnungen in die Mischkammer 6 münden, um eine direkte dynamische Beeinflussung der Ansaugströmungen verhindern zu können. Gleichermaßen sollten die Ansaugöffnungen entsprechend beabstandet voneinander positioniert sein.

Die Verwendung der zuvor beschriebenen speziellen Mischkammer 6 bzw. Mischstrecke 12 ist nicht auf die in Fig. 4 dargestellte Ausführungsform der erfindungsgemäßen Inertisierungsanlage 1 beschränkt. Vielmehr ist es sehr wohl denkbar, die in Fig. 4 gezeigte Mischkammer 6 bzw. Mischstrecke 12 auch bei den in den Figuren 1 bis 3 dargestellten Ausführungsformen einzusetzen, um die Betriebsweisen der Inertisierungsanlagen 1 zu optimieren.

Wie auch bei den zuvor beschriebenen Ausführungsformen der erfindungsgemäßen Inertisierungsanlage ist bei der Inertisierungsanlage 1 gemäß der Darstellung in Fig. 4 vorgesehen, dass der Sauerstoffgehalt des in der Mischkammer 6 bereitgestellten Anfangs-Gasgemisches kontinuierlich oder zu vorgegebenen Zeiten bzw. Ereignissen gemessen und der Messwert der Steuereinrichtung 5 zugeführt wird. Hierzu ist es von Vorteil, wenn am stromabwärts liegenden Endbereich der Mischstrecke 12 ein geeigneter Sauerstoffsensor 22 angeordnet ist.

Ferner ist es von Vorteil, ein Sauerstoffmesssystem in der Rückführleitung 9 vorzusehen. An Stelle eines Sauerstoffmesssystems in der Rückführleitung 9 kann allerdings auch der Sauerstoffgehalt in der Raumluft des umschlossenen Raumes 2 erfasst werden. Hierzu kommt bei der in Fig. 4 dargestellten Ausführungsform ein entsprechendes in dem Raum 2 vorgesehenes Sauerstoffmesssystem 16 zum Einsatz.

Bei der in Fig. 4 dargestellten Ausführungsform, bei welcher zur Gasseparation mehrere Stickstoffgeneratoren 4.1, 4.2, 4.3 zum Einsatz kommen, ist es bevorzugt, wenn die entsprechenden Volumenströme der von den jeweiligen Ausgängen 4a.1, 4a.2, 4a.3 der Stickstoffgeneratoren 4.1, 4.2, 4.3 zum umschlossenen Raum 2 geleiteten Gasströmungen erfasst werden. Wie dargestellt, kommen bei der in Fig. 4 gezeigten Ausführungsform hierzu geeignete Sensoren 28.1, 28.2, 28.3 zum Einsatz.

Darüber hinaus ist es von Vorteil, den Volumenstrom der Rückführung 9 mit Hilfe eines Volumenstromsensors 29, den Volumenstrom der Frischluftzufuhr 8 mit Hilfe eines Volumenstromsensors 30 und ggf. die Volumenströme der den einzelnen Kompressoren 3.1, 3.2, 3.3 zugeführten Anfangs-Gasgemische zu erfassen. Sämtliche Messwerte werden der Steuereinrichtung 5 zugeführt. Diese steuert die entsprechenden ansteuerbaren Komponenten der Inertisierungsanlage 1 geeignet an, um den Differenzdruck zwischen der Mischkammer 6 und dem Außenbereich 25 in dem zulässigen Regelbereich zu halten.

Des Weiteren ist bei der in Fig. 4 dargestellten Ausführungsform vorgesehen, dass mit Hilfe der Steuereinrichtung 5 der Sauerstoffrestgehalt bei jedem Stickstoffgenerator 4.1, 4.2, 4.3 eingestellt werden kann.

Bei einer bevorzugten Realisierung der in Fig. 4 schematisch dargestellten Inertisierungsanlage 1 kommen parallel 10 bis 11 VPSA-Stickstoffgeneratoren und 2 bis 4 Membran-Stickstoffgeneratoren zum Einsatz, wobei die Mischkammer eine Fläche von 10 m X 4,3 m aufweist.

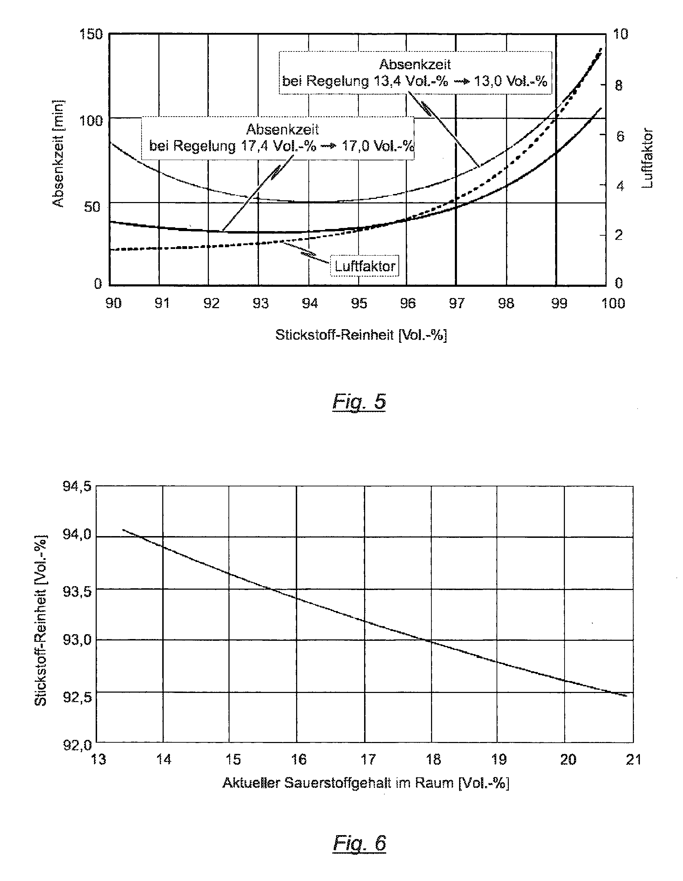

Wie es nachfolgend unter Bezugnahme auf die graphischen Darstellungen gemäß den Figuren 5 bis 7 im Einzelnen dargelegt wird, kann durch ein geeignetes Einstellen der Stickstoff-Reinheit des bzw. der zum Einsatz kommenden Stickstoffgeneratoren 4.1, 4.2, 4.3 bzw. durch ein geeignetes Einstellen des Sauerstoffrestgehaltes in dem am jeweiligen Ausgang 4a.1, 4a.2, 4a.3 des Gasseparationssystems bereitgestellten und mit Stickstoff angereicherten Gasgemisch in einer zeitoptimierten Weise ein vorgegebenes Absenkungsniveau in der Raumatmosphäre des umschlossenen Raumes 2 eingestellt werden. Demnach ist bei der erfindungsgemäßen Lösung vorgesehen, dass die Stickstoff-Reinheit des bzw. der zum Einsatz kommenden Stickstoffgeneratoren 4.1, 4.2, 4.3 bei der Inertisierung des umschlossenen Raumes 2 in Abhängigkeit von dem aktuellen Sauerstoffgehalt in der Raumatmosphäre des umschlossenen Raumes 2 eingestellt und angepasst wird.

Die Stickstoff-Reinheit kann verändert werden, indem die Verweilzeit des Anfangs-Gasgemisches in dem mindestens einen Membranmodul 19 des bzw. der zum Einsatz kommenden Stickstoffgeneratoren 4.1, 4.2, 4.3 variiert wird. Hierzu ist es beispielsweise denkbar, dass am Ausgang des Membranmoduls 19 mit einem geeigneten Regelventil 24 der Durchfluss durch das Membranmodul 19 und ein Gegendruck gesteuert werden. Ein hoher Druck auf der Membrane und eine lange Verweilzeit (niedriger Durchfluss) führen zu einer hohen Stickstoff-Reinheit am entsprechenden Ausgang 4a.1, 4a.2, 4a.3 des jeweiligen zum Einsatz kommenden Stickstoffgenerators 4.1, 4.2, 4.3.

Vorzugsweise wird für die jeweilige Stickstoff-Reinheit ein zeitoptimierter Wert gewählt, der es ermöglicht, dass mit der Inertisierungsanlage in kürzester Zeit ein vorab festgelegtes Inertisierungsniveau in dem umschlossenen Raum 2 eingestellt und gehalten werden kann. Durch Verwendung entsprechender zeitoptimierter Werte für die Stickstoff-Reinheit ist es beim Einstellen und Halten eines vorgegebenen Inertisierungsniveaus in der Raumatmosphäre des umschlossenen Raumes 2 möglich, die Zeitdauer des Absenkvorgangs (sei es für die Halteregelung bei einem festen Restsauerstoffgehalt oder während des Absenkens auf ein neues Absenkungsniveau) zu reduzieren und somit auch den Energieverbrauch der Inertisierungsanlage herabzusetzen, da der Kompressor 3.1, 3.2 bzw. 3.3 auf seinem Arbeitspunkt mit optimalem Wirkungsgrad digital (ein/aus) gefahren wird.

Des Weiteren zeichnet sich die Inertisierunsanlage 1 gemäß der in Fig. 1, Fig. 2, Fig. 3 oder in Fig. 4 dargestellten Ausführungsform dadurch aus, dass dem Gasseparationssystem bestehend aus dem Kompressor 3.1 und dem Stickstoffgenerator 4.1 bzw. dem Gasseparationssystem bestehend aus den Kompressoren 3.1, 3.2, 3.3 und den Stickstoffgeneratoren 4.1, 4.2, 4.3 von der Mischkammer 6 ein Anfangs-Gasgemisch bereitgestellt wird, welches einen Sauerstoffgehalt aufweist, der niedriger als der Sauerstoffgehalt von normaler Umgebungsluft (d.h. etwa 21 Vol.-%) sein kann. Im Einzelnen ist hierfür die bereits genannte Rückführungsleitung 9 vorgesehen, mit welcher zumindest ein Teil der Raumluft des umschlossenen Raumes 2 der Mischkammer 6 in einer von der Steuereinrichtung 5 über das Ventil 11 geregelten Weise zugeführt werden kann. Wenn demnach in dem umschlossenen Raum 2 der Sauerstoffgehalt bereits reduziert ist, wird über die Rückführungsleitung 9 der Mischkammer 6 ein im Vergleich zur normalen Umgebungsluft mit Stickstoff angereichertes Gasgemisch zugeführt. Dieser Teil der Raumluft wird in der Mischkammer 6 mit Zuluft vermischt, um für den Kompressor 3.1 und den Stickstoffgenerator 4.1 bzw. den Kompressoren 3.1, 3.2, 3.3 und den Stickstoffgeneratoren 4.1, 4.2, 4.3 die erforderliche Menge des Anfangs-Gasgemisches bereitzustellen. Da der Sauerstoffgehalt des Anfangs-Gasgemisches einen Einfluss auf den Luftfaktor des Gasseparationssystems bzw. der zum Einsatz kommenden Stickstoffgeneratoren 4.1, 4.2, 4.3 hat, und somit auch einen Einfluss auf den zeitoptimierten Wert der Stickstoff-Reinheit der zum Einsatz kommenden Stickstoffgeneratoren 4.1, 4.2, 4.3 hat, ist bei der in Fig. 1 dargestellten Ausführungsform der erfindungsgemäßen Inertisierungsanlage 1 in dem Leitungssystem 15.1 zwischen dem Ausgang der Mischkammer 6 und dem Eingang des Kompressors 3.1 ein Sauerstoffmesssystem 22 zum Messen des Sauerstoffgehaltes in dem Ausgang-Gasgemisch vorgesehen. Optional hierzu ist es ferner denkbar, entsprechende Sauerstoffmesssysteme 23, 24 in der Rückführleitung 9 bzw. in der Frischluftzuführleitung 8 vorzusehen, um kontinuierlich oder zu vorgegebenen Zeiten bzw. Ereignissen den Sauerstoffgehalt in der Zuluft und in der mit Stickstoff angereicherten Raumluft zu erfassen. Anhand der Messergebnisse kann durch geeignetes Ansteuern der Ventilatoreinrichtungen 10 bzw. 11 die Zusammensetzung des Anfangs-Gasgemisches (insbesondere im Hinblick auf den Sauerstoffgehalt) geeignet beeinflusst werden.

Nachfolgend wird unter Bezugnahme auf die graphischen Darstellungen gemäß den Figuren 5 bis 7 die Wirkungsweise der erfindungsgemäßen Lösung anhand der in Fig. 1 bis 4 schematisch dargestellten Inertisierungsanlage 1 beschrieben. Hierbei wird davon ausgegangen, dass bei der in Fig. 1 bis 4 schematisch dargestellten Inertisierungsanlage 1 der umschlossene Raum 2 ein Raumvolumen von 1.000 m³ aufweist. Ferner soll davon ausgegangen werden, dass die Inertisierungsanlage 1 ausgelegt ist, am Ausgang des Gasseparationssystems pro Stunde insgesamt maximal 48 m³ mit Stickstoff angereichertes Gas bereitzustellen.

In Fig. 5 ist in einer graphischen Darstellung der Luftfaktor des bei der in Fig. 1 bis 4 schematisch dargestellten Inertisierungsanlage 1 zum Einsatz kommenden Gasseparationssystems bei unterschiedlichen Stickstoff-Reinheiten dargestellt. Demgemäß bleibt festzuhalten, dass der Luftfaktor exponentiell mit abnehmendem Sauerstoffrestgehalt in dem am Ausgang des Gasseparationssystems bereitgestellten und mit Stickstoff angereicherten Gasgemisch zunimmt. Im Einzelnen liegt der Luftfaktor bei einem Sauerstoffrestgehalt von 10 Vol.-% (Stickstoff-Reinheit: 90 %) bei etwa 1,5, was bedeutet, dass pro m³ Anfangs-Gasgemisch am Ausgang des Gasseparationssystems eine Menge von 0,67 m³ an mit Stickstoff angereichertem Gasgemisch bereitgestellt werden kann. Dieses Verhältnis verschlechtert sich mit zunehmender Stickstoff-Reinheit, wie es der graphischen Darstellung in Fig. 5 entnommen werden kann.

In Fig. 5 ist zusätzlich zu der Entwicklung des Luftfaktors dargestellt, wie sich die Regelabsenkzeit bei unterschiedlichen Stickstoff-Reinheiten mit zunehmender Stickstoff-Reinheit verhält. Im Einzelnen ist zum einen dargestellt, wie lange der Kompressor bzw. die Kompressoren 3.1, 3.2, 3.3 laufen muss/müssen, um in der Raumatmosphäre des umschlossenen Raumes 2 den Sauerstoffgehalt von ursprünglich 17,4 Vol.-% auf 17,0 Vol.-% abzusenken. Zusätzlich hierzu ist zum anderen dargestellt, wie lange der Kompressor bzw. die Kompressoren 3.1, 3.2, 3.3 laufen muss/müssen, um bei der Inertisierungsanlage 1 gemäß Fig. 1 bis 4 in der Raumluftatmosphäre des umschlossenen Raumes 2 den Sauerstoffgehalt von ursprünglich 13,4 Vol.-% auf 13,0 Vol.-% abzusenken.

Der Vergleich der beiden Absenkzeiten (Absenkzeit bei Regelung 17,4 Vol.-% → 17,0 Vol.-% und Absenkzeit bei Regelung 13,4 Vol.-% → 13,0 Vol.-%) zeigt, dass zum Einstellen und Halten eines Inertisierungsniveaus von 17,0 Vol.-% die Laufzeit des Kompressors 3.1 bzw. der Kompressoren 3.1, 3.2, 3.3 minimiert werden kann, wenn am Gasseparationssystem eine Stickstoff-Reinheit von etwa 93,3 Vol.-% eingestellt wird. Zum Einstellen und Halten eines Inertisierungsniveaus bei 13 Vol.-% Sauerstoffgehalt liegt hingegen die zeitoptimierte Reinheit bei etwa 94,1 Vol.-% Stickstoff. Demnach ist die Absenkzeit bzw. Laufzeit des Kompressors 3.1 bzw. der Kompressoren 3.1, 3.2, 3.3 zum Einstellen eines vorgegebenen Inertisierungsniveaus in der Raumluftatmosphäre des umschlossenen Raumes 2 abhängig von der beim Gasseparationssystem eingestellten Stickstoff-Reinheit bzw. abhängig von dem an den zum Einsatz kommenden Stickstoffgeneratoren 4.1, 4.2, 4.3 eingestellten Sauerstoffrestgehalt in dem am Ausgang des Gasseparationssystem bereitgestellten und mit Stickstoff angereicherten Gasgemisch.

Die jeweiligen Minima der Absenkzeit gegenüber der Stickstoff-Reinheit wird nachfolgend als "zeitoptimierte Stickstoff-Reinheit" bezeichnet. In der Darstellung gemäß Fig. 6 ist die zeitoptimierte Stickstoff-Reinheit bei der Inertisierungsanlage 1 gemäß Fig. 1 bis 4 dargestellt. Im Einzelnen ist für unterschiedliche Sauerstoffkonzentrationen in der Raumatmosphäre des umschlossenen Raumes 2 die zeitoptimierte Reinheit angegeben, welche für das Gasseparationssystem der Inertisierungsanlage 1 gemäß Fig. 1 bis 4 gilt.

Der in Fig. 6 dargestellten Kennlinie ist unmittelbar zu entnehmen, dass die zum Einsatz kommenden Stickstoffgeneratoren 4.1, 4.2, 4.3 so einzustellen sind, dass mit abnehmendem Sauerstoffgehalt in der Raumatmosphäre des umschlossenen Raumes 2 der Sauerstoffrestgehalt in dem am Ausgang des Gasseparationssystems bereitgestellten Gasgemisches abnimmt. Wenn demgemäß die Stickstoff-Reinheit der zum Einsatz kommenden Stickstoffgenerator beim Inertisieren des umschlossenen Raumes 2 gemäß der in Fig. 6 dargestellten Kennlinie betrieben wird, ist es möglich, mit möglichst geringer Laufzeit der zum Einsatz kommenden Kompressoren 3.1, 3.2, 3.3 und somit mit möglichst geringem Energieaufwand das vorgegebene Inertisierungsniveau in der Raumatmosphäre des umschlossenen Raumes 2 einzustellen und zu halten.

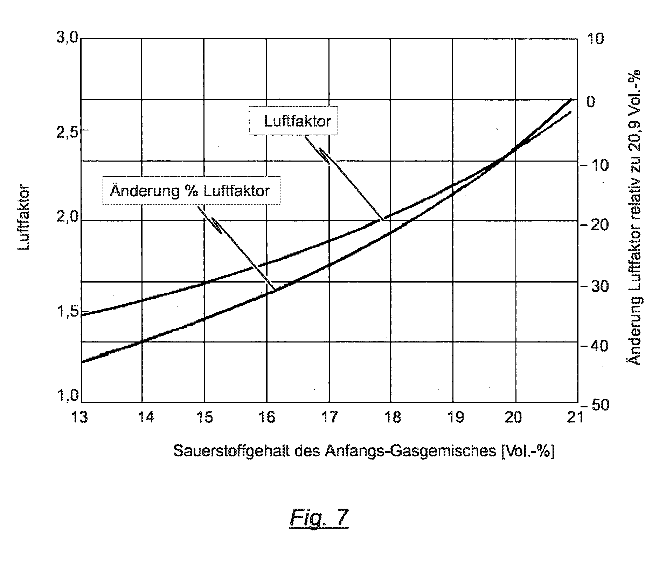

In Fig. 7 ist in einer graphischen Darstellung der Einfluss des Sauerstoffgehaltes in dem Anfangs-Gasgemisch auf den Luftfaktor des Gasseparationssystems gezeigt. Demnach sinkt der Luftfaktor bei einer fixierten Stickstoff-Reinheit des Gasseparationssystems bei Reduzierung des Sauerstoffgehalts in dem Anfangs-Gasgemisch. Wie bereits angedeutet, ist bei der Inertisierungsanlage 1 gemäß der schematischen Darstellung beispielsweise in Fig. 1 die Rückführungsleitung 9 vorgesehen, über welche ein Teil der (ggf. bereits mit Stickstoff angereicherten) Raumluft in geregelter Weise der Mischkammer 6 zugeführt wird, um auf diese Weise den Sauerstoffgehalt in dem Anfangs-Gasgemisch von den ursprünglichen 21 Vol.-% (Sauerstoffgehalt der normalen Umgebungsluft) zu reduzieren. Durch diese Rezirkulation der bereits mit Stickstoff angereicherten Raumluft kann somit der Luftfaktor des Gasseparationssystems weiter reduziert werden, so dass die Effizienz des Gasseparationssystems ansteigt und die zum Einstellen und Halten eines vorgegebenen Inertisierungsniveaus aufzubringende Energie noch weiter reduziert werden kann.

Vorzugsweise wird die in Fig. 7 dargestellte Kennlinie mit dem zuvor unter Bezugnahme auf die graphischen Darstellungen in den Figuren 5 und 6 gezeigten Verfahren so kombiniert, dass für jede Sauerstoffkonzentration in dem Anfangs-Gasgemisch und im Raum 2 eine optimierte Liefereinheit des Stickstoffs gefunden wird.

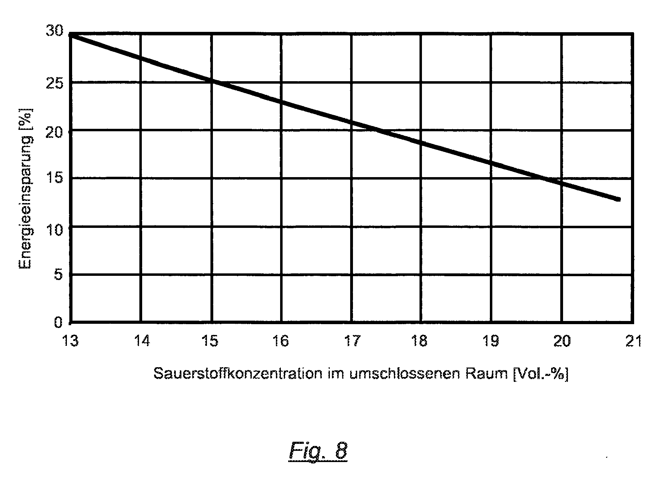

In Fig. 8 sind ― für eine berechnete Anwendung ― erzielbare Energieeinsparungen (in %) über den in der Raumatmosphäre eines umschlossenen Raumes eingestellten Sauerstoffgehalt dargestellt, wenn mit der erfindungsgemäßen Lösung die Sauerstoffkonzentration in der Raumatmosphäre des umschlossenen Raumes abgesenkt wird. Hierbei wurde ein Fall berücksichtigt, bei welchem einerseits während der Inertisierung des Raumes für die Stickstoff-Reinheit des Stickstoffgenerators die zeitoptimierte Stickstoff-Reinheit gewählt wurde, und bei welchem andererseits eine Rezirkulation der bereits mit Stickstoff angereicherten Raumluft erfolgte, um auf diese Weise den Luftfaktor des Stickstoffgenerators weiter zu reduzieren und seine Effizienz zu steigern.

Die Erfindung ist nicht auf die unter Bezugnahme auf die Darstellungen der beigefügten Zeichnungen gezeigten Ausführungsbeispiele beschränkt, sondern ergibt sich aus einer Zusammenschau sämtlicher hierin offenbarter Merkmale.

### Bezugszeichenliste

- 1: Inertisierungsanlage
- 2: umschlossener Raum
- 3.1, 3.2, 3.3: Kompressor
- 4.1, 4.2, 4.3: Stickstoffgenerator
- 4a.1, 4a.2, 4a.3: Ausgang des Stickstoffgenerators
- 5: Steuereinrichtung
- 6: Mischkammer
- 7.1, 7.2, 7.3: Zufuhrleitung
- 8: (Frischluft-)Zufuhrleitung
- 8a: Eingang der Frischluft-Zufuhrleitung
- 9: Rückführleitung
- 9a: Eingang der Rückführleitung
- 10: zweite Ventilatoreinrichtung
- 11: erste Ventilatoreinrichtung
- 12: Mischstrecke
- 13: Wärmetauschersystem
- 14: Stützventilator
- 15.1, 15.2, 15.3: Leitungssystem zwischen Mischkammer und Kompressor
- 16: Sauerstoffmesssystem
- 17.1, 17.2, 17.3: Leitungssystem zwischen Kompressor und Stickstoffgenerator
- 18: Filter
- 19: Membranmodul
- 20: thermische Isolierung
- 21: Sauerstoffrestgehalt-Messsystem
- 23: Sauerstoffmesssystem in Rückführleitung 9
- 24: Sauerstoffmesssystem in Zufuhrleitung 8
- 25: Außenbereich
- 26: Drucksensor in der Mischkammer
- 27: Drucksensor im Außenbereich
- 28.1, 28.2, 28.3: Volumenstromsensor in Zufuhrleitung 7.1, 7.2, 7.3
- 29: Volumenstromsensor in Rückführleitung 9
- 30: Volumenstromsensor in Frischluft-Zufuhrleitung 8

## Patentansprüche

1. Inertisierungsverfahren zur Brandverhütung und/oder Feuerlöschung, bei welchem in der Raumatmosphäre eines umschlossenen Raumes (2) ein vorgebbarer und im Vergleich zur normalen Umgebungsluft reduzierter Sauerstoffgehalt eingestellt und gehalten wird, wobei das Verfahren die folgenden Verfahrensschritte aufweist:
- es wird in einer Mischkammer (6) ein Anfangs-Gasgemisch bereitgestellt, welches Sauerstoff, Stickstoff und ggf. weitere Komponenten aufweist;
- es wird in einem Gasseparationssystem (3.1, 4.1; 3.2, 4.2; 3.3, 4.3) zumindest ein Teil des Sauerstoffs aus dem bereitgestellten Anfangs-Gasgemisch abgetrennt und auf diese Weise am Ausgang (4a.1; 4a.2; 4a.3) des Gasseparationssystems (3.1, 4.1; 3.2, 4.2; 3.3, 4.3) ein mit Stickstoff angereichertes Gasgemisch bereitgestellt; und
- das mit Stickstoff angereicherte Gasgemisch wird in die Raumatmosphäre des umschlossenen Raumes (2) geleitet,
wobei der Sauerstoffrestgehalt des mit Stickstoff angereicherten Gasgemisches in Abhängigkeit von dem aktuell in der Raumatmosphäre des umschlossenen Raumes (10) herrschenden Sauerstoffgehalt verändert wird,
wobei zum Bereitstellen des Anfangs-Gasgemisches mit Hilfe einer in einem den umschlossenen Raum (2) mit der Mischkammer (6) verbindenden Rückführleitungssystem (9) vorgesehenen Ventilatoreinrichtung (11) ein Teil der in dem umschlossenen Raum (2) enthaltenen Raumluft in geregelter Weise dem Raum (2) entnommen und der Mischkammer (6) zugeführt und dem entnommenen Teil der Raumluft mit Hilfe einer in einem mit der Mischkammer (6) verbundenen Frischluft-Zuführleitungssystem (8) vorgesehenen Ventilatoreinrichtung (10) in geregelter Weise Frischluft zugemischt wird,
**dadurch gekennzeichnet, dass**
die in dem Rückführleitungssystem (9) vorgesehene Ventilatoreinrichtung (11) und/oder die in dem Frischluft-Zuführleitungssystem (8) vorgesehene Ventilatoreinrichtung (10) derart angesteuert werden, dass die pro Zeiteinheit dem Raum (2) entnommene und der Mischkammer (6) zugeführte Menge an Raumluft und/oder die pro Zeiteinheit dem entnommenen Teil der Raumluft zugemischte Menge an Frischluft derart eingestellt werden, dass die Differenz zwischen dem in der Mischkammer (6) herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet.

2. Inertisierungsverfahren nach Anspruch 1,
wobei der obere Schwellwert für den Differenzdruck bei 1,0 mbar und vorzugsweise bei 0,5 mbar liegt, und wobei der untere Schwellwert für den Differenzdruck bei 0 mbar liegt.

3. Inertisierungsverfahren nach Anspruch 1 oder 2,
wobei die in dem Frischluft-Zuführleitungssystem (8) vorgesehene Ventilatoreinrichtung (10) derart angesteuert wird, dass die Menge der pro Zeiteinheit dem Raum (2) entnommenen Raumluft identisch ist mit der Menge des mit Stickstoff angereicherten Gasgemisches, welche pro Zeiteinheit in die Raumatmosphäre des umschlossenen Raums (2) geleitet wird.

4. Inertisierungsverfahren nach einem der Ansprüche 1 bis 3,
wobei der Sauerstoffrestgehalt des mit Stickstoff angereicherten Gasgemisches mit abnehmendem Sauerstoffgehalt in der Raumatmosphäre des umschlossenen Raumes (2) reduziert wird.

5. Inertisierungsverfahren nach einem der Ansprüche 1 bis 4,
wobei der Sauerstoffrestgehalt des mit Stickstoff angereicherten Gasgemisches gemäß einer vorab ermittelten Kennlinie eingestellt wird, wobei die Kennlinie den zeitoptimierten Wert des Sauerstoffrestgehaltes des mit Stickstoff angereicherten Gasgemisches gegenüber dem Sauerstoffgehalt in der Raumatmosphäre des umschlossenen Raumes (2) angibt, gemäß welchem mit dem Inertisierungsverfahren innerhalb kürzester Zeit in der Raumatmosphäre des umschlossenen Raumes (2) ein vorgebbarer und im Vergleich zur normalen Umgebungsluft reduzierter Sauerstoffgehalt einstellbar ist; oder
wobei kontinuierlich oder zu vorgegebenen Zeiten und/oder Ereignissen der aktuell in der Raumatmosphäre des umschlossenen Raumes (2) herrschende Sauerstoffgehalt direkt oder indirekt gemessen wird, und wobei kontinuierlich oder zu vorgegebenen Zeiten und/oder Ereignissen der Sauerstoffrestgehalt des mit Stickstoff angereicherten Gasgemisches auf einen vorab festgelegten Wert eingestellt wird, bei welchem mit dem Inertisierungsverfahren der Sauerstoffgehalt in der Raumatmosphäre des umschlossenen Raumes innerhalb kürzester Zeit um einen vorgegebenen Absenkungsbetrag auf den jeweils aktuellen Sauerstoffgehalt absenkbar ist.

6. Inertisierungsverfahren nach einem der Ansprüche 1 bis 5,
wobei der Sauerstoffgehalt des Anfangs-Gasgemisches, aus welchem zumindest ein Teil des Sauerstoffs abgetrennt wird, in Abhängigkeit von dem aktuell in der Raumatmosphäre des umschlossenen Raumes (2) herrschenden Sauerstoffgehalt verändert wird.

7. Inertisierungsanlage (1) zum Einstellen und/oder Halten eines vorgebbaren und im Vergleich zur normalen Umgebungsluft reduzierten Sauerstoffgehalts in der Raumatmosphäre eines umschlossenen Raumes (2), wobei die Inertisierungsanlage ein Gasseparationssystem (3.1, 4.1; 3.2, 4.2; 3.3, 4.3) aufweist, mit welchem von einem Stickstoff und Sauerstoff enthaltenen Anfangs-Gasgemisch zumindest ein Teil des Sauerstoffs abgetrennt und auf diese Weise am Ausgang (4a.1; 4a.2; 4a.3) des Gasseparationssystems (3.1, 4.1; 3.2, 4.2; 3.3, 4.3) ein mit Stickstoff angereichertes Gasgemisch bereitgestellt wird, und wobei die Inertisierungsanlage (1) ein Zuführleitungssystem (7) aufweist zum Zuführen des mit Stickstoff angereicherten Gasgemisches zu dem umschlossenen Raum (2),
wobei ferner eine Steuereinrichtung (5) vorgesehen ist, welche ausgelegt ist, das Gasseparationssystem (3.1, 4.1; 3.2, 4.2; 3.3, 4.3) derart anzusteuern; dass der Sauerstoffrestgehalt des mit Stickstoff angereicherten Gasgemisches in Abhängigkeit von dem aktuell in der Raumatmosphäre des umschlossenen Raumes (10) herrschenden Sauerstoffgehalt verändert wird, und
wobei ferner eine Mischkammer (6) vorgesehen ist zum Bereitstellen des Anfangs-Gasgemisches, wobei in der Mischkammer (6) ein erstes Leitungssystem (9) mündet, über welches in einer von der Steuereinrichtung (5) geregelten Weise ein Teil der in dem umschlossenen Raum (2) enthaltenen Raumluft dem Raum (2) entnommen und der Mischkammer (6) zugeführt wird, und wobei in der Mischkammer (6) ein zweites Leitungssystem (8) mündet, über welches in einer von der Steuereinrichtung (5) geregelten Weise Frischluft der Mischkammer (6) zugeführt wird,
**dadurch gekennzeichnet, dass**
die Inertisierungsanlage (1) ferner in dem ersten Leitungssystem (9) eine erste mit der Steuereinrichtung (5) ansteuerbare Ventilatoreinrichtung (11) und in dem zweiten Leitungssystem (8) eine zweite mit der Steuereinrichtung (5) ansteuerbare Ventilatoreinrichtung (10) aufweist, wobei die Steuereinrichtung (5) ausgelegt ist, die erste und/oder zweite Ventilatoreinrichtung (10, 11) derart anzusteuern, dass die mit Hilfe der ersten Ventilatoreinrichtung (11) pro Zeiteinheit dem Raum (2) entnommene und der Mischkammer (6) zugeführte Menge an Raumluft und/oder die mit Hilfe der zweiten Ventilatoreinrichtung (10) pro Zeiteinheit dem entnommenen Teil der Raumluft zugemischte Menge an Frischluft derart eingestellt wird, dass die Differenz zwischen dem in der Mischkammer (6) herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet.

8. Inertisierungsanlage (1) nach Anspruch 7,
welche ferner in dem ersten Leitungssystem (9) eine erste mit der Steuereinrichtung (5) ansteuerbare Ventilatoreinrichtung (11) und in dem zweiten Leitungssystem (8) eine zweite mit der Steuereinrichtung (5) ansteuerbare Ventilatoreinrichtung (10) aufweist, wobei die Steuereinrichtung (5) ausgelegt ist, die erste und/oder zweite Ventilatoreinrichtung (10, 11) derart anzusteuern, dass die Menge der pro Zeiteinheit dem Raum (2) entnommenen Raumluft identisch ist mit der Menge des mit Stickstoff angereicherten Gasgemisches, welche pro Zeiteinheit der Raumatmosphäre des umschlossenen Raumes (2) zugeführt wird.

9. Inertisierungsanlage (1) nach Anspruch 7 oder 8,
wobei ferner eine in der Mischkammer (6) integrierte oder der Mischkammer (6) vorgeschaltete Mischstrecke (12) vorgesehen ist, in welcher das erste und zweite Leitungssystem (9, 8) vorzugsweise über ein Y-Stück münden, wobei die Mischstrecke (12) insbesondere im Hinblick auf ihren effektiven Strömungsquerschnitt derart konfiguriert ist, dass sich in der Mischstrecke (12) eine turbulente Strömung einstellt.

10. Inertisierungsanlage (1) nach Anspruch 9,
wobei die Mischstrecke (12) eine Länge aufweist, die mindestens das Fünffache des hydraulischen Durchmessers der Mischstrecke (12) ist.

11. Inertisierungsanlage (1) nach einem der Ansprüche 7 bis 10,
wobei das Gasseparationssystem (3.1, 4.1; 3.2, 4.2; 3.3, 4.3) mindestens einen und vorzugsweise eine Vielzahl von Stickstoffgeneratoren (4.1, 4.2, 4.3) mit jeweils einem zugeordneten und über ein Leitungssystem (14.1, 17.2, 17.3) mit der Mischkammer (6) verbundenen Kompressor (3.1, 3.2, 3.3) aufweist, wobei bei jedem Stickstoffgenerator (3.1, 3.2, 3.3) der Sauerstoffrestgehalt des am Ausgang (4a.1, 4a.2, 4a.3) des Stickstoffgenerators (3.1, 3.2, 3.3) bereitgestellten und mit Stickstoff angereicherten Gasgemisches mit Hilfe der Steuereinrichtung (5) einstellbar ist.

12. Inertisierungsanlage (1) nach Anspruch 11,
wobei die Mischkammer (6) ein Volumen aufweist, welches von der Anzahl der bei der Inertisierungsanlage (1) zum Einsatz kommenden Stickstoffgeneratoren (4.1, 4.2, 4.3) und/oder von dem Prinzip abhängt, auf welchem die Funktionsweise des mindestens einen Stickstoffgenerators (4.1, 4.2, 4.3) basiert.

13. Inertisierungsanlage (1) nach einem der Ansprüche 7 bis 12,
wobei der hydraulische Querschnitt der Mischkammer (6) mindestens so groß ist, dass die in der Mischkammer (6) maximal auftretbare Strömungsgeschwindigkeit im Durchschnitt geringer als 0,1 m/s ist.

14. Inertisierungsanlage (1) nach einem der Ansprüche 7 bis 13,
wobei die Steuereinrichtung (5) ferner ausgelegt ist, in Abhängigkeit von dem aktuell in der Raumatmosphäre des umschlossenen Raumes (2) herrschenden Sauerstoffgehalt das Gasseparationssystem (3.1, 4.1; 3.2, 4.2; 3.3, 4.3) derart anzusteuern, dass der Sauerstoffrestgehalt des am Ausgang (4a.1; 4a.2; 4a.3) des Gasseparationssystems (3.1, 4.1; 3.2, 4.2; 3.3, 4.3) bereitgestellten und mit Stickstoff angereicherten Gasgemisches automatisch reduziert wird, wenn der Sauerstoffgehalt in der Raumatmosphäre des umschlossenen Raumes (2) abnimmt; und/oder wobei die Steuereinrichtung (5) ferner ausgelegt ist, in Abhängigkeit von dem aktuell in der Raumatmosphäre des umschlossenen Raumes (2) herrschenden Sauerstoffgehalt die pro Zeiteinheit dem Raum (2) entnommene und der Mischkammer (6) zugeführte Menge an Raumluft und die pro Zeiteinheit dem entnommenen Teil der Raumluft zugemischte Menge an Frischluft derart einzustellen, dass das von der Mischkammer (6) bereitgestellte Anfangs-Gasgemisch einen von dem aktuell in der Raumatmosphäre des umschlossenen Raumes (2) herrschenden Sauerstoffgehalt abhängigen und vorgebbaren Sauerstoffgehalt aufweist.

## Claims

1. An inertization method for preventing and/or extinguishing fire in which a predefinable oxygen content which is lower than normal ambient air is set and maintained in the spatial atmosphere of an enclosed room (2), wherein the method comprises the following steps:
- preparing an initial gas mixture containing oxygen, nitrogen and other components as applicable in a mixing chamber (6);
- separating off at least a portion of the oxygen from said provided initial gas mixture in a gas separation system (3.1, 4.1; 3.2, 4.2; 3.3, 4.3) and thereby providing a nitrogen-enriched gas mixture at the outlet (4a.1; 4a.2; 4a.3) of the gas separation system (3.1, 4.1; 3.2, 4.2; 3.3, 4.3); and
- piping the nitrogen-enriched gas mixture into the spatial atmosphere of the enclosed room (2),
wherein the residual oxygen content of the nitrogen-enriched gas mixture is varied as a function of the oxygen content prevailing in the spatial atmosphere of the enclosed room (10) at the respective moment, wherein to prepare the initial gas mixture using a fan mechanism (11) provided in the return line system (9) connecting the enclosed room (9) to the mixing chamber (6), a portion of the ambient air contained within the enclosed room (2) is withdrawn from the room (2) and supplied to the mixing chamber (6) in regulated manner and the withdrawn portion of the room's air is admixed with fresh air in regulated manner by means of a fan mechanism (10) provided in a fresh air supply line system (8) connected to the mixing chamber (6),
**characterized in that**
the fan mechanism (11) provided in the return supply line system (9) and/or the fan mechanism (10) provided in the fresh air supply line system (8) is controlled such that the volume of air withdrawn from the room (2) per unit of time and supplied to the mixing chamber (6) and/or the volume of fresh air mixed with the withdrawn volume of room air per unit of time can be set such that the difference between the pressure prevailing in the mixing chamber (6) and the external ambient atmosphere does not exceed a predefined or predefinable upper threshold nor fall short of a predefined or predefinable lower threshold.

2. The inertization method according to claim 1,
wherein the upper pressure differential threshold is 1.0 mbar and preferably 0.5 mbar, and wherein the lower pressure differential threshold is 0 mbar.

3. The inertization method according to claim 1 or 2,
wherein the fan mechanism (10) provided in the fresh air supply line system (8) is controlled such that the volume of spatial air withdrawn from the room (2) per unit of time is identical to the volume of nitrogen-enriched gas mixture supplied to the spatial atmosphere of the enclosed room (2) per unit of time.

4. The inertization method according to any one of claims 1 to 3,
wherein the residual oxygen content of the nitrogen-enriched gas mixture decreases as the oxygen content in the spatial atmosphere of the enclosed room (2) decreases.

5. The inertization method according to any one of claims 1 to 4,
wherein the residual oxygen content of the nitrogen-enriched gas mixture is set according to a predetermined characteristic curve,
wherein the characteristic curve specifics the time-optimized value for the residual oxygen content of the nitrogen-enriched gas mixture in relation to the oxygen content in the spatial atmosphere of the enclosed room (2), according to which the inerting process can set a predefinable reduced oxygen content in the spatial atmosphere of the enclosed room (2) compared to normal ambient air in the shortest amount of time; or wherein the oxygen content prevailing in the spatial atmosphere of the enclosed room (2) at the respective moment is directly or indirectly measured continuously or at predefined times and/or upon predefined events, and wherein the residual oxygen content in the nitrogen-enriched gas mixture is set continuously or at predefined times and/or upon predefined events to a predefined value at which the inertization method can lower the oxygen content in the spatial atmosphere of the enclosed room to a predefined drawdown value based on the respectively current oxygen content within the shortest amount of time.

6. The inertization method according to any one of claims 1 to 5,
wherein the oxygen content of the initial gas mixture, from which at least a portion of the oxygen is separated off, is varied as a function of the oxygen content prevailing at the respective moment in the spatial atmosphere of the enclosed room (2).

7. An inertization system (1) for setting and/or maintaining a predefinable oxygen content in the spatial atmosphere of an enclosed room (2) which is reduced compared to normal ambient air, wherein the inertization system comprises a gas separation system (3.1, 4.1; 3.2, 4.2; 3.3, 4.3) which separates off at least a portion of the oxygen from an initial gas mixture containing nitrogen and oxygen and thereby provides a nitrogen-enriched gas mixture at the outlet (4a.1; 4a.2; 4a.3) of the gas separation system (3.1, 4.1; 3.2, 4.2; 3.3, 4.3), and wherein the inertization system (1) comprises a supply line system (7) for supplying the nitrogen-enriched gas mixture to the enclosed room (2),
wherein a control unit (5) is further provided which is designed to control the gas separation system (3.1, 4.1; 3.2, 4.2; 3.3, 4.3) such that the residual oxygen content of the nitrogen-enriched gas mixture is varied as a function of the oxygen content prevailing at the respective moment in the spatial atmosphere of the enclosed room (2), and
wherein a mixing chamber (6) is further provided to prepare the initial gas mixture, wherein a first line system (9) through which a portion of the spatial air contained in the enclosed room (2) is withdrawn and supplied to said mixing chamber (6) in a manner regulated by the control unit (5) opens into the mixing chamber (6), and wherein a second line system (8) through which fresh air is supplied to the mixing chamber (6) in a manner regulated by the control unit (5) opens into said mixing chamber (6),
**characterized in that**
the inertization system (1) further comprises a fan mechanism (11) in the first line system (9) controllable by means of the control unit (5) and a second fan mechanism (10) in the second line system (8) controllable by means of the control unit (5),
wherein the control unit (5) is designed so as to actuate the first and/or second fan mechanism (10, 11) such that the volume of air withdrawn from the room (2) per unit of time and fed to the mixing chamber (6) by means of said first fan mechanism (11) and/or the volume of fresh air admixed with the withdrawn portion of room air per unit of time by means of said second fan mechanism (10) can be set such that the difference between the pressure prevailing in the mixing chamber (6) and the external ambient atmosphere does not exceed a predefined or predefinable upper threshold nor fall short of a predefined or predefinable lower threshold.

8. The inertization system (1) according to claim 7,
wherein a first fan mechanism (11) actuatable by a control unit (5) is further provided in the first line system (9) and a second fan mechanism (10) actuatable by a control unit (5) is provided in the second line system (8), wherein the control unit (5) is designed to control the first and/or second fan mechanism (10, 11) such that the volume of spatial air withdrawn from the room (2) per unit of time is identical to the volume of the nitrogen-enriched gas mixture which is supplied to the spatial atmosphere of the enclosed room (2) per unit of time.

9. The inertization system (1) according to claim 7 or 8,
wherein a mixing section (12) is further integrated in the mixing chamber (6) or provided upstream of the mixing chamber (6) into which opens the first and the second line system (9, 8), preferably by means of a Y-connector, wherein the mixing section (12) is configured particularly with respect to its effective flow cross section such that a turbulent flow will occur in the mixing section (12).

10. The inertization system (1) according to claim 9,
wherein the mixing section (12) is of a length which is at least five times the hydraulic diameter of the mixing section (12).

11. The inertization system (1) according to any one of claims 7 to 10,
wherein the gas separation system (3.1, 4.1; 3.2, 4.2; 3.3, 4.3) comprises at least one and preferably a plurality of nitrogen generators (4.1, 4.2, 4.3) each associated with a respective compressor (3.1, 3.2, 3.3) connected to the mixing chamber (6) by means of a line system (17.1, 17.2, 17.3), wherein the residual oxygen content of the nitrogen-enriched gas mixture provided at the outlet (4a.1, 4a.2, 4a.3) of the nitrogen generator (3.1, 3.2, 3.3) can be set at each nitrogen generator (3.1, 3.2, 3.3) by means of the control unit (5).

12. The inertization system (1) according to claim 11,
wherein the mixing chamber (6) exhibits a volume which is dependent on the number of nitrogen generators (4.1, 4.2, 4.3) used in the inertization system (1) and/or on the principle on which the functioning of the least one nitrogen generator (4.1, 4.2, 4.3) is based.

13. The inertization system (1) according to any one of claims 7 to 12,
wherein the hydraulic cross section of the mixing chamber (6) is at least large enough that the maximum flow rate which can occur in the mixing chamber (6) is less than 0.1 m/s on average.

14. The inertization system (1) according to any one of claims 7 to 13,
wherein the control unit (5) is further designed to control the gas separation system (3.1, 4.1;3.2, 4.2; 3.3, 4.3) as a function of the oxygen content prevailing at the respective moment in the spatial atmosphere of the enclosed room (2) such that the residual oxygen content of the nitrogen-enriched gas mixture provided at the outlet (4a.1; 4a.2; 4a.3) of the gas separation system (3.1, 4.1; 3.2, 4.2; 3.3, 4.3) is automatically decreased as the oxygen content in the spatial atmosphere of the enclosed room (2) decreases; and/or
wherein the control unit (5) is further designed to set the volume of the spatial air withdrawn from the room (2) per unit of time and fed to the mixing chamber (6) and the volume of fresh air admixed to the withdrawn room air per unit of time as a function of the oxygen content prevailing at the respective moment in the spatial atmosphere of the enclosed room (2) such that the initial gas mixture provided by the mixing chamber (6) exhibits a predefinable oxygen content which is dependent on the oxygen content prevailing in the spatial atmosphere of the enclosed room (2) at that respective moment.

## Revendications

1. Procédé d'inertisation pour la prévention anti-incendie et/ou l'extinction d'incendies, dans lequel on établit, dans l'atmosphère ambiante d'un local fermé (2), une teneur en oxygène prédéterminée réduite par comparaison à l'air environnant normal et on la maintient, le procédé comprenant les étapes suivantes :
- on met à disposition un mélange gazeux de départ dans une chambre de mélange (6), lequel comprend de l'oxygène, de l'azote et le cas échéant d'autres composantes ;
- dans un système de séparation de gaz (3.1, 4.1 ; 3.2, 4.2 ; 3.3, 4.3), on sépare au moins une partie de l'oxygène hors du mélange gazeux de départ préparé et de cette manière à la sortie (4a.1 ; 4a.2 ; 4a.3) du système de séparation de gaz (3.1, 4.1 ; 3.2, 4.2 ; 3.3, 4.3) on met à disposition un mélange gazeux enrichi en azote ; et
- le mélange gazeux en azote est amené dans l'atmosphère ambiante du local fermé (2),
dans lequel la teneur résiduelle en oxygène du mélange gazeux enrichi en azote est modifiée en fonction de la teneur en oxygène régnant actuellement dans l'atmosphère ambiante du local fermé (10),
dans lequel pour mettre à disposition le mélange gazeux de départ, avec l'aide d'un moyen à ventilateur (11) prévu dans un système de conduite de retour (9) qui relie le local fermé (2) avec la chambre de mélange (6), on prélève de manière régulée hors du local (2) une partie de l'air ambiant contenu dans le local fermé (2) et on l'admet dans la chambre de mélange, et on additionne de l'air frais à la partie prélevée de l'air ambiant, d'une manière régulée, avec l'aide d'un moyen à ventilateur (10) prévu dans un système de conduite d'admission d'air frais (8) relié à la chambre de mélange (6),
**caractérisé en ce que**
le moyen à ventilateur (11) prévu dans le système de conduite de retour (9) et/ou le moyen à ventilateur (10) prévu dans le système de conduite d'admission d'air frais (8) sont pilotés de telle manière que la quantité d'air ambiant prélevée depuis le local par unité de temps et la quantité admise dans la chambre de mélange (6) et/ou la quantité d'air frais ajoutée par unité de temps à la partie prélevée de l'air ambiant sont établies de telle manière que la différence entre la pression qui règne dans la chambre de mélange (6) et la pression atmosphérique extérieure ne dépasse par une valeur seuil supérieure prédéterminée ou susceptible d'être prédéterminée, et ne passe pas au-dessous d'une valeur seuil inférieure prédéterminée ou susceptible d'être prédéterminée.

2. Procédé d'inertisation selon la revendication 1,
dans lequel la valeur seuil supérieure pour la pression différentielle est de l'ordre de 1,0 mbar et de préférence 0,5 mbar, et dans lequel la valeur seuil inférieure pour la pression différentielle est de l'ordre de 0 mbar.

3. Procédé d'inertisation selon la revendication 1 ou 2,
dans lequel le moyen à ventilateur (10) prévu dans le système de conduite d'admission d'air frais (8) est piloté de telle manière que la quantité d'air ambiant prélevée par unité de temps hors du local (2) est identique à la quantité du mélange gazeux enrichi en azote qui est amenée par unité de temps dans l'atmosphère ambiante du local fermé (2).

4. Procédé d'inertisation selon l'une d'revendication 1 à 3,
dans lequel la teneur résiduelle en oxygène du mélange gazeux enrichi en azote est réduite lors de la diminution de la teneur en oxygène dans l'atmosphère ambiante du local fermé (2).

5. Procédé d'inertisation selon l'une des revendications 1 à 4,
dans lequel la teneur résiduelle en oxygène du mélange gazeux enrichi en azote est établie selon une courbe caractéristique préalablement déterminée, ladite courbe caractéristique indiquant la valeur, optimisée dans le temps, de la teneur résiduelle en oxygène du mélange gazeux enrichi en azote par rapport à la teneur en oxygène dans l'atmosphère ambiante du local fermé (2), d'après laquelle on peut établir au moyen du procédé d'inertisation à l'intérieur d'un temps très court dans l'atmosphère ambiante du local fermé (2) une teneur en oxygène prédéterminée et réduite par comparaison à l'air environnant normal ; ou
dans lequel on mesure directement ou indirectement, de manière continue ou à des instants prédéterminés et/ou à des événements prédéterminés, la teneur en oxygène qui règne actuellement dans l'atmosphère ambiante du local fermé (2), et on établit en continu ou à des instants prédéterminés et/ou à des événements prédéterminés la teneur en oxygène du mélange gazeux enrichi en azote à une valeur préalablement fixée, pour laquelle avec le procédé d'inertisation, la teneur en oxygène dans l'atmosphère ambiante du local fermé peut être réduite à dans le temps le plus court à raison d'une valeur d'abaissement prédéterminé, vers la teneur en oxygène respectivement actuelle.

6. Procédé d'inertisation selon l'une des revendications 1 à 5,
dans lequel la teneur en oxygène du mélange gazeux de départ, hors duquel au moins une partie de l'oxygène a été séparée, est modifiée en fonction de la teneur en oxygène actuelle qui règne dans l'atmosphère ambiante du local fermé (2).

7. Installation d'inertisation (1) pour établir et/ou maintenir une teneur en oxygène prédéterminée et réduite par comparaison à l'air environnant normal dans l'atmosphère ambiante d'un local fermé (2), dans laquelle l'installation d'inertisation comprend un système de séparation de gaz (3.1, 4.1 ; 3.2, 4.2 ; 3.3, 4.3) au moyen duquel on sépare, depuis un mélange gazeux de départ contenant de l'azote et de l'oxygène, au moins une partie de l'oxygène et l'on met de cette manière à la sortie (4a.1 ; 4a.2 ; 4a.3) du système de séparation de gaz (3.1, 4.1 ; 3.2, 4.2 ; 3.3, 4.3) à disposition un mélange gazeux enrichi en azote, et dans laquelle l'installation d'inertisation (1) comprend un système de conduite d'admission (7) pour admettre le mélange gazeux enrichi en azote vers le local fermé (2),
dans laquelle il est en outre prévu un système de commande (5) qui est conçu pour piloter le système de séparation de gaz (3.1, 4.1 ; 3.2, 4.2 ; 3.3, 4.3) de telle manière que la teneur résiduelle en oxygène du mélange gazeux enrichi en azote est modifiée en fonction de la teneur actuelle en oxygène régnant dans l'atmosphère ambiante du local fermé (10), et
il est en outre prévu une chambre de mélange (6) pour mettre à disposition le mélange gazeux de départ, avec un premier système de conduite (9) débouchant dans la chambre de mélange (6), système via lequel une partie de l'air ambiant contenu dans le local fermé (2) est prélevée hors du local (2) d'une manière régulée par le système de commande (5) et est admise à la chambre de mélange (6), et dans laquelle dans la chambre de mélange (6) débouche un second système de conduite (8) via lequel de l'air frais est admis dans la chambre de mélange (6) d'une manière régulée par le système de commande (5), **caractérisée en ce que**
l'installation d'inertisation (1) comprend en outre dans le premier système de conduite (9) un premier moyen à ventilateur (11) capable d'être piloté avec le système de commande (5), et dans le second système de conduite (8) un second moyen à ventilateur (10) capable d'être piloté avec le système de commande (5), et le système de commande (5) est conçu pour piloter le premier et/ou le second moyen à ventilateur (10, 11) de telle façon qu'avec l'aide du premier moyen à ventilateur (11) la quantité d'air ambiant prélevée par unité de temps hors du local (2) et admise dans la chambre de mélange (6) et/ou la quantité d'air frais ajoutée avec l'aide du second moyen à ventilateur (10) par unité de temps à la partie prélevée de l'air ambiant est établie de telle façon que la différence entre la pression régnant dans la chambre de mélange (6) et la pression atmosphérique extérieure ne dépasse pas une valeur seuil supérieure prédéterminée ou susceptible d'être prédéterminée et ne passe pas au-dessous d'une valeur seuil inférieure prédéterminée ou susceptible d'être prédéterminée.

8. Installation d'inertisation (1) selon la revendication 7, qui comprend en outre dans le premier système de conduite (9) un premier moyen à ventilateur (11) capable d'être piloté avec le système de commande (5) et dans le second système de conduite (8) un second moyen à ventilateur (10) capable d'être piloté avec le système de commande (5), ledit système de commande (5) étant conçu pour piloter le premier et/ou le second moyen à ventilateur (10, 11) de telle façon que la quantité d'air ambiant prélevée hors du local (2) par unité de temps est identique à la quantité du mélange gazeux enrichi en azote qui est admise par unité de temps dans l'atmosphère ambiante du local fermé (2).

9. Installation d'inertisation (1) selon la revendication 7 ou 8, dans laquelle il est en outre prévu un trajet de mélange (12) intégré dans la chambre de mélange (6) ou branché en amont de la chambre de mélange (6), trajet dans lequel débouchent le premier et le second système de conduite (9, 8), de préférence via une pièce en Y, et le trajet de mélange (12) est configuré, en particulier pour ce qui concerne sa section d'écoulement effective, de telle façon qu'il s'établit un écoulement turbulent dans le trajet de mélange.

10. Installation d'inertisation (1) selon la revendication 9,
dans laquelle le trajet de mélange (12) a une longueur qui est au moins cinq fois le diamètre hydraulique du trajet de mélange (12).

11. Installation d'inertisation (1) selon l'une des revendications 7 à 10,
dans laquelle le système de séparation de gaz (3.1, 4.1 ; 3.2, 4.2 ; 3.3, 4.3) comprend au moins un et de préférence une pluralité de générateurs d'azote (4.1, 4.2, 4.3) avec chacun un compresseur associé (3.1, 3.2, 3.3) et relié à la chambre de mélange (6) via un système de conduite (14.1, 17.2, 17.3), dans laquelle à chaque générateur d'azote (4.1, 4.2, 4.3) la teneur résiduelle en oxygène du mélange gazeux mis à disposition à la sortie (4a.1 ; 4a.2 ; 4a.3) du générateur d'azote (4.1, 4.2, 4.3) et enrichi en azote est susceptible d'être régulée à l'aide du système de commande (5).

12. Installation d'inertisation (1) selon la revendication 11,
dans laquelle la chambre de mélange (6) présente un volume qui dépend du nombre des générateurs d'azote (4.1, 4.2, 4.3) qui entrent en action dans l'installation d'inertisation (1) et/ou dépend du principe sur lequel est basé le mode opératoire dudit au moins un générateur d'azote (4.1, 4.2, 4.3).

13. Installation d'inertisation (1) selon l'une des revendications 7 à 12,
dans laquelle la section hydraulique de la chambre de mélange (6) est au moins aussi grande que la vitesse d'écoulement maximale susceptible d'apparaître dans la chambre de mélange (6) est en moyenne inférieure à 0,1 m/s.

14. Installation d'inertisation (1) selon l'une des revendications 7 à 13, dans laquelle le système de commande (5) est en outre conçu pour piloter le système de séparation de gaz (3.1, 4.1 ; 3.2, 4.2 ; 3.3, 4.3) en fonction de la teneur en oxygène actuelle régnant dans l'atmosphère ambiante du local fermé (2) de telle façon que la teneur résiduelle en oxygène du mélange gazeux mis à disposition à la sortie (4a.1 ; 4a.2 ; 4a.3) du système de séparation de gaz (3.1, 4.1 ; 3.2, 4.2 ; 3.3, 4.3) et enrichi en azote est automatiquement réduite quand la teneur en oxygène dans l'atmosphère ambiante du local fermé (2) diminue ; et/ou dans laquelle le système de commande (5) est en outre conçu pour établir, en fonction de la teneur en oxygène actuelle régnant dans l'atmosphère ambiante du local fermé (2), la quantité d'air ambiant prélevé par unité de temps depuis le local (2) et admise à la chambre de mélange (6) et la quantité d'air frais ajoutée par unité de temps à la partie d'air ambiant prélevée de telle manière que le mélange gazeux de départ mis à disposition par la chambre de mélange (6) présente une teneur en oxygène qui dépend de la teneur en oxygène actuelle régnant dans l'atmosphère ambiante du local fermé (2) et susceptible d'être prédéterminée.
